# EUROPÄISCHE PATENTSCHRIFT

(11) **EP 4 031 325 B1**
(45) Veröffentlichungstag und Bekanntmachung des Hinweises auf die Patenterteilung: **21.06.2023**
(21) Anmeldenummer: 20792288.1
(22) Anmeldetag: 07.09.2020
(51) Int. Cl.: B24B 13/005, B24B 41/00, B24B 13/00, B24B 27/00, B29D 11/00

(54) **LADESYSTEM FÜR EINE OPTIKMASCHINE, INSBESONDERE ZUM LADEN UND ENTLADEN OPTISCHER WERKSTÜCKE, WIE BRILLENGLÄSER, UND ABBLOCKVORRICHTUNG UMFASSEND EIN SOLCHES LADESYSTEM**
LOADING SYSTEM FOR AN OPTICAL MACHINE, PARTICULARLY FOR LOADING AND UNLOADING OPTICAL WORKPIECES, SUCH AS SPECTACLE LENSES, AND DEBLOCKING APPARATUS COMPRISING SUCH A LOADING SYSTEM
SYSTÈME DE CHARGEMENT POUR UNE MACHINE OPTIQUE, EN PARTICULIER POUR CHARGER ET LE DÉCHARGER DES PIÈCES OPTIQUES, TELLES QUE DES VERRES DE LUNETTES, ET APPAREL DE DÉBLOCAGE COMPRENANT UN TEL SYSTÈME DE CHARGEMENT

(30) Priorität: 16.09.2019 DE 102019006503
(43) Veröffentlichungstag der Anmeldung: 27.07.2022
(73) Patentinhaber: Satisloh AG, 6340 Baar (CH)
(72) Erfinder: SCHÄFER, Holger, 35789 Weilmünster (DE); WALLENDORF, Steffen, 35582 Wetzlar-Dutenhofen (DE); LAUTZ, Martin, 35580 Wetzlar-Nauborn (DE); PAVEL, Gregor, 35625 Hüttenberg (DE)
(74) Vertreter: Oppermann, Mark
(86) Internationale Anmeldenummer: PCT/EP2020/000150
(87) Internationale Veröffentlichungsnummer: WO 2021/052614

(56) Entgegenhaltungen:
- WO-A1-96/37346
- CN-A- 109 693 177
- DE-A1-102017 001 679
- DE-A1-102017 003 014
- US-A- 4 807 398
- US-A- 5 055 263

## Beschreibung

### TECHNISCHES GEBIET

Die vorliegende Erfindung bezieht sich allgemein auf ein Ladesystem für eine Optikmaschine gemäß dem Oberbegriff des Patentanspruchs 1. Insbesondere bezieht sich die Erfindung auf ein Ladesystem zum Laden und Entladen optischer Werkstücke, wie Brillengläser, wie sie in modernen "RX-Werkstätten", d.h. industriellen Produktionsstätten zur Fertigung von individuellen Brillengläsern nach Rezept umfänglich zum Einsatz kommen. Wenn auch nachfolgend insbesondere vom Laden bzw. Entladen von Werkstücken die Rede ist, so ist das Ladesystem doch gleichermaßen auch für einen Wechsel von z.B. Werkzeugen geeignet, was demgemäß als mitumfasst anzusehen ist.

Die Erfindung bezieht sich ferner auf eine Vorrichtung zum Abblocken von optischen Werkstücken, insbesondere Brillengläsern, von zugeordneten Blockstücken, die ein solches Ladesystem umfasst, um vor dem Abblocken geblockte Werkstücke und nach dem Abblocken Blockstücke und abgeblockte Werkstücke handzuhaben.

### STAND DER TECHNIK

Als "Aufblocken" oder kurz "Blocken" wird in der Optikfertigung allgemein der Vorgang bezeichnet, bei dem ein optisches Werkstück mittels eines geeigneten Materials (niedrig schmelzende Legierung - sogenanntes "Alloy" - oder Klebstoff) auf einem sogenannten "Blockstück" temporär befestigt wird, oder aber das Blockmaterial auf dem Werkstück aufgebracht wird, um selbst das Blockstück auszubilden, welches dann dazu dient, das Werkstück in der jeweiligen Bearbeitungsmaschine und/oder Beschichtungsanlage zu halten. Dementsprechend heißt in der Optikfertigung derjenige Vorgang "Abblocken", bei dem das optische Werkstück nach dessen (End)Bearbeitung (an Fläche und/oder Rand) und/oder Beschichtung wieder vom Blockstück/ Blockmaterial getrennt wird.

In den vorerwähnten RX-Werkstätten werden Brillengläser massenweise geblockt, bevor das jeweilige geblockte Brillenglas an seiner Rück- oder Frontfläche im Hinblick auf seine optische Wirkung und/oder am Rand zur Einpassung in ein zugeordnetes Brillengestell mit geometrisch bestimmter Schneide (Fräsen/Drehen) oder geometrisch unbestimmter Schneide (Schleifen/Polieren) spanend bearbeitet und/oder auf seiner Rück- oder Frontfläche zur Erzielung zusätzlicher Wirkungen (Erhöhung der Kratzfestigkeit, Antireflexionseigenschaften, Verspiegelung, hydrophobe Eigenschaften, etc.) beschichtet wird.

Wenn nachfolgend im Zusammenhang mit der vorliegenden Erfindung als bevorzugtem Anwendungsgebiet allgemein von "Brillengläsern" die Rede ist, sind darunter optische Linsen oder Linsenrohlinge (Blanks) für Brillen aus den gebräuchlichen Materialien, wie Polycarbonat, Mineralglas, CR 39, HI-Index, etc. und mit beliebiger (Vor)Form des Umfangsrands der Linse bzw. des Linsenrohlings zu verstehen, die vor dem Blocken bereits an einer oder beiden optisch wirksamen Fläche(n) und/oder am Rand (vor)bearbeitet und/oder (vor)beschichtet sein können aber nicht müssen. Auch kann das Brillenglas auf seiner Fläche, an der es geblockt wird/ist, mit einer Folie, einem Lack od.dgl. versehen sein, um diese Fläche vor Verunreinigung und Beschädigung zu schützen und/oder die Haftungseigenschaften zwischen Brillenglas und Blockmaterial zu verbessern, ohne dass dies im Folgenden jeweils eigens erwähnt wird.

Im Stand der Technik fehlt es nicht an Vorschlägen, wie in der industriellen Fertigung von Brillengläsern die Werkstücke zur Bearbeitung oder weiteren Behandlung automatisiert in eine Optikmaschine geladen und nach der Bearbeitung bzw. weiteren Behandlung wieder aus der Optikmaschine entnommen werden können. So offenbart die Druckschrift DE 10 2014 015 053 A1 (Fig. 1) eine Poliermaschine zum Polieren von Brillengläsern, mit einer Mehrzahl von Polierzellen, die in einem gemeinsamen Maschinengestell nebeneinander angeordnet sind. Das Maschinengestell trägt ferner eine Waschstation zum Waschen der polierten Brillengläser und eine Übergabestation für die Ablage von in der Brillenglasfertigung üblichen, sogenannten "Rezeptkästen". Letztere dienen der Aufnahme von zu polierenden und polierten Brillengläsern und können mittels eines Förderbands der Übergabestation in der Poliermaschine vor und zurück bewegt werden.

Als Ladesystem weist die vorbekannte Poliermaschine des Weiteren ein Portalhandlingsystem auf, mittels dessen die Brillengläser automatisch zwischen den vorgenannten Stationen und Polierzellen transportiert und in der jeweiligen Station bzw. Polierzelle positioniert werden können. Hierfür hat das Portalhandlingsystem eine im Raum bewegbare Saugereinheit zum Halten eines zu polierenden Brillenglases an der zu polierenden optisch wirksamen Fläche sowie einen im Raum bewegbaren Mehrfingergreifer zum Halten eines polierten Brillenglases an dessen Rand. Die angesprochenen Bewegungsmöglichkeiten im Raum umfassen horizontale (x, y) bzw. vertikale (z) Linearbewegungen sowie eine Kippbewegung (b) um eine zu einer horizontalen Bewegungsrichtung (y) parallele Querachse.

Genauer gesagt hat das Portalhandlingsystem zwei x-Lineareinheiten mit Antrieb für die Erzeugung der x-Bewegung, die oben an der Poliermaschine zu beiden Seiten des Maschinengestells angeordnet sind. Die x-Schlitten der x-Lineareinheiten tragen jeweils eine Schwenkhalterung, die unter Zuhilfenahme eines Pneumatikzylinders eine Verkippung einer an den Schwenkhalterungen angebrachten, das "Portal" bildenden y-Lineareinheit mit Antrieb für die Erzeugung der y-Bewegung um einen vorbestimmten Winkel ermöglicht. Durch diese Maßnahme kann eine an einem y-Schlitten der y-Lineareinheit angebrachte z-Lineareinheit aus der Vertikalen verkippt werden, um an eine Werkstückspindel-Schrägstellung angepasst zu werden, die sich in dem im Maschinengestell montierten Zustand der Polierzellen ergibt. An der z-Lineareinheit sind schließlich die Saugereinheit und der Mehrfingergreifer längsverschieblich montiert, und zwar derart, dass sie mittels eines gemeinsamen Antriebs gegenläufig bewegt werden können, d.h. wenn die Saugereinheit nach unten gefahren wird fährt zugleich der Mehrfingergreifer nach oben und umgekehrt.

Ein zu polierendes Brillenglas kann so mittels der Saugereinheit des Portalhandlingsystems aus einem Rezeptkasten auf der Übergabestation durch Verfahren der z-Lineareinheit herausgehoben (z), sodann im Raum bewegt (b, x, y) und an einer schräggestellten Werkstückspindel der gewünschten Polierzelle zur Polierbearbeitung eingesetzt (z) werden. Nach der Polierbearbeitung kann das fertig polierte Brillenglas mittels des Mehrfingergreifers aus der jeweiligen Polierzelle herausgehoben (z), zur Waschstation transportiert (b, x, y) und in diese eingesetzt (z) werden, um durch Waschen Poliermittelreste zu entfernen. Das saubere Brillenglas kann abschließend mittels des Mehrfingergreifers aus der Waschstation herausgehoben (z), zum jeweiligen Rezeptkasten auf der Übergabestation bewegt (x, y) und darin abgesetzt (z) werden. Die Brillengläser können demnach mittels des Portalhandlingsystems wie gewünscht bzw. notwendig zwischen den Polierzellen und Stationen hin und her transportiert werden.

Ein ähnliches Ladesystem offenbart die den Oberbegriff des Patentanspruchs 1 bildende Druckschrift DE 10 2017 001 679 A1 für den Fall einer Abblockvorrichtung. Das im Sprachgebrauch dieser Druckschrift als "Manipulationseinrichtung" bezeichnete Ladesystem, das oberhalb eines Arbeitsraums an einem Gestell der Abblockvorrichtung befestigt ist, umfasst drei unabhängig voneinander in vertikaler Richtung (Z) teleskopierbare Greifer. Die Greifer dienen dazu, die geblockte Linse, also die Linse zusammen mit dem zugeordneten Blockstück, die abgeblockte Linse und das abgeblockte Blockstück unabhängig voneinander zu greifen, aufzunehmen, zu fördern und abzulegen, und zwar an bzw. zwischen Transportträgern auf einer Zufördereinrichtung und hiervon beabstandeten Halteeinrichtungen für Linse und Blockstück an einem Arbeitsraum, in dem das Abblocken erfolgt.

Dabei sind die Greifer mit ihren zugeordneten Stelleinrichtungen (Pneumatikzylinder für die Z-Richtung) an einem Träger gehalten, der in einer horizontalen Ebene (X-Y-Ebene) bewegt werden kann. Hierzu ist der Träger an einer ersten Linearführung (Y-Richtung) montiert, die wiederum mit ihrem Antrieb an einer zweiten Linearführung (X-Richtung) angebracht ist, welche am Gestell montiert ist. Die Energieführung zu den Stelleinrichtungen und Linearführungen erfolgt über Kabelschleppsysteme. Dies und das Gewicht der aufeinander angeordneten Linearführungen nebst zugeordneten Antrieben limitiert indes die Dynamik dieses vorbekannten Ladesystems.

### AUFGABENSTELLUNG

Der Erfindung liegt die Aufgabe zugrunde, ein Ladesystem für eine Optikmaschine, insbesondere zum Laden und Entladen optischer Werkstücke, wie Brillengläser, und/oder von Blockstücken zum Aufblocken von optischen Werkstücken und/oder von Werkzeugen zu schaffen, das möglichst einfach und kompakt baut und ein Laden bzw. Entladen mit tunlichst hoher Dynamik ermöglicht. Die Erfindungsaufgabe umfasst auch die Bereitstellung einer Vorrichtung zum Abblocken von optischen Werkstücken, insbesondere Brillengläsern, von zugeordneten Blockstücken, die zwecks Erzielung eines möglichst hohen Durchsatzes in einem industriellen Fertigungsumfeld ein solches Ladesystem aufweist.

### DARSTELLUNG DER ERFINDUNG

Diese Aufgabe wird durch ein Ladesystem für eine Optikmaschine mit den Merkmalen des Patentanspruchs 1 bzw. durch eine Vorrichtung zum Abblocken von optischen Werkstücken, namentlich Brillengläsern, von zugeordneten Blockstücken, mit den Merkmalen des Patentanspruchs 12 gelöst. Vorteilhafte Ausgestaltungen der Erfindung sind Gegenstand der Unteransprüche.

Bei einem Ladesystem für eine Optikmaschine, insbesondere zum Laden und Entladen optischer Werkstücke, wie Brillengläser, und/oder von Blockstücken zum Aufblocken von optischen Werkstücken und/oder von Werkzeugen, umfassend einen in einer Bewegungsebene über zwei Linearführungseinheiten bewegbaren Träger, der wenigstens einen in einer Querrichtung zur Bewegungsebene bewegbaren Halter für das optische Werkstück und/ oder das Blockstück und/oder das Werkzeug trägt, sind erfindungsgemäß die Linearführungseinheiten in der Art eines H- oder Kreuzportals ausgebildet und angeordnet, mit zwei ortsfesten Antriebsmotoren für den gleich- oder gegensinnigen Antrieb eines Zugglieds, das in einer H- oder Kreuzform an den Linearführungseinheiten bewegbar angeordnet und am Träger befestigt ist.

Im Falle einer Vorrichtung zum Abblocken von optischen Werkstücken, insbesondere Brillengläsern, von zugeordneten Blockstücken, umfassend eine Übergabestation für die Ablage von auf Blockstücken aufgeblockten optischen Werkstücken und/oder abgeblockten optischen Werkstücken und/oder Blockstücken, und eine Ladestation zum Beladen von auf Blockstücken aufgeblockten optischen Werkstücken vor dem Abblocken und/oder Entladen von abgeblockten optischen Werkstücken und/oder von Blockstücken nach dem Abblocken, ist erfindungsgemäß das obige Ladesystem vorgesehen, mittels dessen die auf Blockstücken aufgeblockten optischen Werkstücke und/oder die abgeblockten optischen Werkstücke und/oder die Blockstücke zwischen der Übergabestation und der Ladestation transportierbar und in die bzw. aus der jeweilige(n) Station einlegbar bzw. entnehmbar sind.

Dadurch, dass erfindungsgemäß die beiden Antriebsmotoren für den gleich- oder gegensinnigen Antrieb des Zugglieds ortsfest angeordnet sind, d.h. anders als die Antriebsmotoren im vorbeschriebenen Stand der Technik nicht zusammen mit dem bewegbaren Träger oder einer Linearführungseinheit bewegt werden und auch nicht über zugeordnete Kabelschleppsysteme zu versorgen sind, ist gemäß der vorliegenden Erfindung bei einem vergleichsweise niedrigen vorrichtungstechnischen Aufwand und einer vorteilhaft flachen Systembauweise nur eine geringe bewegte Eigenmasse des Ladesystems vorhanden. Dies ermöglicht hohe Beschleunigungen des bewegbaren Trägers in beiden Achsrichtungen der Bewegungsebene, so dass die am querbewegbaren Halter des Trägers gehaltenen Teile (optische Werkstücke, Blockstücke bzw. Werkzeuge) mit sehr hoher Dynamik bewegt werden können.

Hierbei sind die Linearführungseinheiten des erfindungsgemäßen Ladesystems in der Art eines H-Portals - wie es nachfolgend noch ausführlich beschrieben wird - oder aber in der Art eines X- oder Kreuzportals ausgebildet und angeordnet. Da später zum Ausführungsbeispiel lediglich das H-Portal näher erläutert wird, soll an dieser Stelle das Kreuzportal kurz beschrieben werden: Im Falle eines Kreuzportals umfassen die Linearführungseinheiten zwei Traversen, nämlich eine feststehende erste Traverse, die beispielsweise an einem Maschinengestell der Optikmaschine montiert und auf der ein Schlitten in z.B. einer y-Richtung beweglich geführt ist, und eine bewegliche zweite Traverse, welche die erste Traverse - namensgebend - kreuzt und die auf dem vorgenannten Schlitten in einer Quer-, d.h. z.B. einer x-Richtung beweglich angeordnet ist. An der zweiten Traverse ist dann endseitig der Träger angebracht, an dem der in einer weiteren Quer-, d.h. hier einer z-Richtung bewegliche Halter gelagert ist. In einer Draufsicht, d.h. entgegen der z-Richtung gesehen ergibt sich somit ein Kreuz, mit horizontaler Ausrichtung der ortsfesten ersten Traverse (y-Richtung nach rechts) und vertikaler Ausrichtung der längsverschieblichen zweiten Traverse (x-Richtung nach unten).

Zum Bewegen des Trägers in der Bewegungsebene x-y des Kreuzportals ist das Zugglied vorgesehen, das in Kreuzform an den Linearführungseinheiten bewegbar angeordnet und am Träger befestigt ist. Genauer gesagt ist das Zugglied über vier 90°-Umlenkrollen an dem Schlitten, zwei 180°-Umlenkrollen an den Enden der feststehenden ersten Traverse und eine 180°-Umlenkrolle an dem freien, vom Träger abgewandten Ende der beweglichen zweiten Traverse geführt. Der Antrieb des Zugglieds kann über die zwei 180°-Umlenkrollen an den Enden der feststehenden ersten Traverse erfolgen, die jeweils mit einem der zwei ortsfesten Antriebsmotoren antriebsverbunden sind.

In der vorbeschriebenen Draufsicht gesehen lassen sich folgende Bewegungen des Trägers in der Bewegungsebene x-y des Kreuzportals erzeugen: Werden beide 180°-Umlenkrollen mit gleicher Geschwindigkeit und positiver Drehrichtung (d.h. im Uhrzeigersinn) angetrieben, so bewegt sich der am Ende der zweiten Traverse angebrachte Träger in negativer y-Richtung. Erfolgt der Antrieb der beiden 180°-Umlenkrollen mit gleicher Geschwindigkeit und in negativer Drehrichtung (d.h. entgegen dem Uhrzeigersinn), dann bewegt sich der Träger in positiver y-Richtung. Eine Bewegung des Trägers in positiver x-Richtung ergibt sich, wenn die in der Draufsicht gesehen rechte 180°-Umlenkrolle in positiver Drehrichtung und die in der Draufsicht gesehen linke 180°-Umlenkrolle in negativer Drehrichtung mit der gleichen Geschwindigkeit angetrieben werden. Bei einer Drehrichtungsumkehr an beiden 180°-Umlenkrollen wird der Träger in negativer x-Richtung bewegt.

Wird nur die in der Draufsicht gesehen linke 180°-Umlenkrolle in positiver Drehrichtung angetrieben, während die rechte 180°-Umlenkrolle steht, so bewegt sich der Schlitten auf der feststehenden ersten Traverse in negativer y-Richtung, während die bewegliche zweite Traverse in negativer x-Richtung verschoben wird, so dass sich der Träger diagonal in negativer y-Richtung und negativer x-Richtung bewegt. Dies lässt sich durch eine Drehrichtungsumkehr an der linken 180°-Umlenkrolle umkehren, so dass sich der Träger diagonal in positiver y-Richtung und positiver x-Richtung bewegt. Analog hierzu lässt sich bei feststehender linker 180°-Umlenkrolle eine diagonale Bewegung des Trägers in negativer y-Richtung und positiver x-Richtung bzw. in positiver y-Richtung und negativer x-Richtung erzeugen, indem die rechte 180°-Umlenkrolle im Uhrzeigersinn bzw. gegen den Uhrzeigersinn angetrieben wird. Darüber hinaus kann durch geeignete Überlagerung der Antriebsbewegungen mit dem Träger jede beliebige Bahn in der Bewegungsebene x-y des Kreuzportals abgefahren werden.

Für den Fachmann ist ersichtlich, dass auf diese Weise der Träger durch geeignete Ansteuerung der ortsfesten Antriebsmotoren jede beliebige Position in der Bewegungsebene x-y anfahren kann. Dies gilt gleichermaßen für die Kreuz- wie für die H-Anordnung der Linearführungseinheiten, wobei die H-Anordnung im Vergleich zur Kreuzanordnung allerdings eine höhere Steifigkeit bei geringerem Bauraumbedarf verspricht und insofern als bevorzugte Anordnung angesehen werden kann.

Gegenüber dem eingangs geschilderten Stand der Technik ermöglicht das Ladesystem in erfindungsgemäßer Ausgestaltung insbesondere bei einem Einsatz an einer Vorrichtung zum Abblocken von optischen Werkstücken, namentlich Brillengläsern, von zugeordneten Blockstücken infolge seiner hohen Dynamik eine erhebliche Steigerung des Durchsatzes von optischen Werkstücken. Diese hohe Durchsatzleistung prädestiniert das erfindungsgemäße Ladesystem für eine Verwendung in einem industriellen Fertigungsumfeld, in dem eine sehr große Anzahl von optischen Werkstücken zur Behandlung bzw. Bearbeitung anfällt.

In einer bevorzugten Ausgestaltung des Ladesystems weist die eine Linearführungseinheit zwei parallel zueinander verlaufende, ortsfeste x-Führungsglieder auf, an denen jeweils ein x-Halbschlitten längsverschieblich geführt ist, während die andere Linearführungseinheit zwei parallel zueinander und quer zu den x-Führungsgliedern verlaufende y-Führungsglieder hat, welche die x-Halbschlitten starr miteinander verbinden und an denen der Träger als y-Schlitten längsverschieblich geführt ist. Grundsätzlich ist es zwar auch denkbar, andere Führungsgliedanordnungen vorzusehen, z.B. ein ortsfestes x-Führungsglied mit einem darauf über einen x-Schlitten verschiebbaren y-Führungsglied für den Träger als y-Schlitten in einer T-Anordnung, als Sonderfall des oben beschriebenen Kreuzportals, wie auch ein ortsfestes x-Führungsglied, auf dem über einen x-Schlitten zwei y-Führungsglieder für den Träger als y-Schlitten bewegbar angeordnet sind, oder zwei ortsfeste x-Führungsglieder, auf denen in H-Form über zwei x-Halbschlitten ein y-Führungsglied für den Träger als y-Schlitten verschiebbar angeordnet ist, wobei die Richtungen x und y auch vertauscht werden können. Diese alternativen Führungsgliedanordnungen mit einzelnen Führungsgliedern in einer Richtung (x und/oder y) wären jedoch entsprechend massiv auszubilden, um Torsionsmomente aufnehmen zu können. Demgegenüber ist die erstgenannte Ausgestaltung des Ladesystems, bei dem zwei y-Führungsglieder Bestandteil eines geteilten x-Schlittens sind, insbesondere im Hinblick auf eine hohe Steifigkeit bei kompakter Bauform bevorzugt.

Bei solchen, in der Art eines H-Portals ausgebildeten und angeordneten Linearführungseinheiten kann in einer zweckmäßigen Ausgestaltung des Ladesystems vorgesehen sein, dass jedem der ortsfesten x-Führungsglieder zwei endseitig angeordnete 180°-Umlenkungen für das Zugglied zugeordnet sind, während jeder der x-Halbschlitten zwei 90°-Umlenkungen für das Zugglied trägt, wobei eine der 180°-Umlenkungen an dem einen x-Führungsglied durch einen der ortsfesten Antriebsmotoren antreibbar ist und unabhängig davon die andere der 180°-Umlenkungen an dem anderen x-Führungsglied durch den anderen der ortsfesten Antriebsmotoren antreibbar ist. Hierbei können die ortsfesten Antriebsmotoren an den x-Führungsgliedern in besonders servicefreundlicher Weise auf der gleichen Seite der x-Führungsglieder oder an entgegengesetzten Enden der x-Führungsglieder, d.h. diagonal versetzt angeordnet sein.

Es ist ferner insbesondere im Hinblick auf eine zuverlässige und verschleißarme Funktion des Ladesystems bevorzugt, wenn eine der 180°-Umlenkungen für das Zugglied mit einer Spanneinrichtung für das Zugglied versehen ist. Prinzipiell kann eine Spannung des Zugglieds zwar auch am Träger oder einer der 90°-Umlenkungen erfolgen, eine solche Ausgestaltung ist jedoch schon insofern weniger bevorzugt, als die Spanneinrichtung dann die bewegte Masse des Ladesystems erhöhen würde. Im Vergleich zu einer ebenfalls denkbaren, ortsfesten Spannrolle od.dgl. für das Zugglied bietet die Spanneinrichtung an einer der 180°-Umlenkungen außerdem den Vorteil, dass schon bei einem kleinen Stellweg an der Spanneinrichtung eine große Spannwirkung erzielt werden kann, weil an zwei Strängen des Zugglieds zugleich in dieselbe Richtung gezogen wird.

Grundsätzlich können zur Führung der x- bzw. y-Schlitten des Ladesystems etwa Linearführungen mit Führungsprofil und damit eingreifenden Führungswagen zum Einsatz kommen. Demgegenüber bevorzugt ist es indes, wenn es sich bei den x-Führungsgliedern und/oder bei den y-Führungsgliedern um Führungsstangen handelt, die auch bei schnellen Bewegungen infolge der möglichen Führung am Umfang bzw. Umschlingung für eine besonders steife Führung sorgen. Insbesondere kann es sich bei den x-Führungsgliedern und/oder bei den y-Führungsgliedern um Führungsstangen mit einem runden Querschnitt handeln, was gegenüber auch möglichen, anderen Querschnittsformen besonders Vorteile hinsichtlich der Reinigungsmöglichkeiten und der Leichtgängigkeit bietet sowie hohe Tragzahlen verspricht. Auch hierbei kann vorgesehen sein, dass insbesondere die y-Führungsglieder als Hohlkörper ausgebildet sind. Gegenüber einer ebenfalls denkbaren, massiven Ausführung der y-Führungsglieder bieten als Hohlkörper gestaltete y-Führungsglieder vor allem Gewichtsvorteile, was wiederum auch einer hohen Dynamik zugutekommt. Ein weiterer Vorteil der hier bevorzugten Stangenführungen besteht schließlich darin, dass der x-Schlitten als leichte, selbsttragende Einheit aus den zwei x-Halbschlitten und den stangenförmigen y-Führungsgliedern aufgebaut werden kann, ohne dass weitere tragende Bauteile benötigt werden.

In einer weiteren, bevorzugten Ausgestaltung des Ladesystems ist jeder der x-Halbschlitten mit zwei axial voneinander beabstandeten Linearlagerelementen versehen, die mit der jeweils als x-Führungsglied zugeordneten Führungsstange zusammenwirken. Dies ist gegenüber einer auch möglichen Ausbildung mit jeweils einem, längeren Linearlagerelement pro x-Halbschlitten vor allem im Hinblick auf die Stabilität der Anordnung von Vorteil. Ebenso kann der als y-Schlitten ausgebildete Träger bevorzugt drei voneinander beabstandete Linearlagerelemente aufweisen, von denen zwei Linearlagerelemente mit dem einen als Führungsstange ausgebildeten y-Führungsglied zusammenwirken, während das andere Linearlagerelement mit dem anderen als Führungsstange ausgebildeten y-Führungsglied zusammenwirkt. Als mögliche Alternative zu dieser statisch bestimmten Lageranordnung wäre eine Lageranordnung mit zwei einzeln oder vier paarweise den beiden y-Führungsgliedern zugeordneten Linearlagerelementen am Träger denkbar, was allerdings weniger steif oder schwerer als die obige, bevorzugte Ausgestaltung wäre.

Bei der obigen, statisch bestimmten Lageranordnung an dem y-Schlitten ist es ferner von Vorteil, wenn in einer bevorzugten Ausgestaltung des Ladesystems das Zugglied nahe den zwei Linearlagerelementen, die beide mit dem einen als Führungsstange ausgebildeten y-Führungsglied zusammenwirken, an einer am Träger vorgesehenen Befestigungsstelle befestigt ist. Somit werden auf einfache Weise der Leichtgängigkeit der Lageranordnung ggf. abträgliche Kippmomente am Träger vermieden. Das einzelne, von der Befestigungsstelle für das Zugglied ferne Linearlagerelement trägt hierbei lediglich ein Teil des Gewichts des Trägers auf dem zugeordneten y-Führungsglied und stützt den Träger gegen ein Verdrehen bezüglich des anderen y-Führungsglieds ab.

Als Linearlagerelemente kommen grundsätzlich alle linear führenden, leichtgängigen Lager in Frage, z.B. Lineargleitlager oder Linearkugellager mit Kugelkäfig. Im Hinblick auf eine gute Verfügbarkeit und geringe Kosten bevorzugt ist es indes, wenn es sich bei den Linearlagerelementen um Kugelbuchsen handelt. Diesen können für eine möglichst dauerhafte Leichtgängigkeit jeweils zu beiden Längsseiten Abstreifer zugeordnet sein.

Auch für das Zugglied sind verschiedene Alternativen denkbar, so etwa ein Seil mit Umschlingungen am Antrieb zur Übertragung des Antriebsmoments oder eine Kette, wie eine Gliederkette oder eine Kugelkette. Insbesondere im Hinblick auf ein gutes Kraftübertragungsvermögen, die Wartungsfreundlichkeit und eine hohe Längenstabilität bevorzugt ist es indes, wenn es sich bei dem Zugglied um einen Riemen, namentlich einen Zahnriemen handelt. Im Falle eines Zahnriemens, der keinen Schlupf und eine feste Teilung aufweist, sind für Positionierungsaufgaben des Ladesystems ggf. sogar Messsysteme für die Verfahrwege des Trägers bzw. des oder der Halter entbehrlich.

Vorzugsweise ist des Weiteren der wenigstens eine oder jeder Halter mittels eines zugeordneten Pneumatikzylinders in der Querrichtung zur Bewegungsebene bewegbar. Als Alternative hierzu sind auch andere Aktoren zur Erzeugung einer Linearbewegung denkbar, z.B. ein Elektroantrieb oder ein Hydraulikzylinder, was insbesondere im Hinblick auf möglichst geringe Kosten indes weniger bevorzugt ist.

Darüber hinaus kann in einer bevorzugten Ausgestaltung des Ladesystems vorgesehen sein, dass der wenigstens eine oder jeder Halter mittels eines zugeordneten pneumatischen Schwenkmechanismus von einer mit der Querrichtung ausgefluchteten Lage zu einer im Wesentlichen senkrecht zur Querrichtung ausgerichteten Lage verschwenkbar ist, und umgekehrt. Auch hier gilt, dass anstelle eine pneumatischen Bewegungserzeugung andere Erzeugungsprinzipien, z.B. elektrisch oder hydraulisch, zum Einsatz kommen können, wenngleich weniger bevorzugt, zumal an einer Optikmaschine Druckluft in der Regel ohnehin vorhanden ist. Die somit gegebene Schwenkmöglichkeit des Halters bzw. der Halter erhöht vorteilhaft die Flexibilität des Ladesystems, weil der bzw. die Halter nicht nur im Sinne eines einfachen "Pick & Place"-Systems im Raum bewegt, sondern auch für verschiedene Einlege- bzw. Entnahmeaufgaben an der Optikmaschine z.B. von einer vertikalen Ausrichtung in eine horizontale Ausrichtung oder umgekehrt gekippt werden kann bzw. können.

Bei dem wenigstens einen oder jedem Halter handelt es sich bevorzugt um einen pneumatisch betätigbaren Mehrfingergreifer, die vorteilhaft optischer Werkstücke mit beliebiger Umfangskontur zu greifen vermögen, ohne beim Greifen oder während des Haltens mit der zumeist empfindlichen Front- oder Rückfläche des Werkstücks in Kontakt zu kommen - anders als etwa ein als Halter ebenfalls denkbarer Vakuum-Saugkopf oder -napf. Bezüglich alternativer Prinzipien der Bewegungserzeugung für die Greiferfinger (z.B. elektrisch oder hydraulisch) gilt hier das oben Gesagte entsprechend.

Im weiteren Verfolg des Erfindungsgedankens kann die Anordnung so getroffen sein, dass eine Ventilinsel zur Ansteuerung des Pneumatikzylinders oder der Pneumatikzylinder und/oder des pneumatischen Schwenkmechanismus oder der pneumatischen Schwenkmechanismen und/oder des pneumatisch betätigbaren Mehrfingergreifers oder der pneumatisch betätigbaren Mehrfingergreifer auf dem als y-Schlitten ausgebildeten Träger angeordnet ist. Somit ist lediglich eine gemeinsame Versorgungsleitung an die mit dem Träger bewegte Ventilinsel zu führen, von wo die weitere pneumatische Unterverteilung erfolgt. Ein größeres, hochdynamische Bewegungen des Trägers ggf. be- oder sogar verhinderndes Schleppsystem für die Versorgung wird so vorteilhaft vermieden.

Insbesondere im Hinblick auf eine möglichst große Steifigkeit und Stabilität bei geringem Gewicht ist in einer bevorzugten Ausgestaltung des Ladesystems vorgesehen, dass der Träger in einer Draufsicht gesehen im Wesentlichen O-förmig ausgebildet ist, mit einer zentralen Öffnung, in der der wenigstens eine Halter in der Querrichtung zur Bewegungsebene bewegbar montiert ist.

Bei einem möglichen Einsatz des erfindungsgemäßen Ladesystems in einer Abblockvorrichtung zum Abblocken von optischen Werkstücken, namentlich Brillengläsern, von zugeordneten Blockstücken ist es besonders vorteilhaft, wenn der Träger des Ladesystems drei in der Querrichtung zur Bewegungsebene bewegbare Halter trägt, von denen ein erster Halter den auf Blockstücken aufgeblockten optischen Werkstücken, ein zweiter Halter den abgeblockten optischen Werkstücken und ein dritter Halter den Blockstücken zugeordnet ist. Somit ist eine weitestgehende Parallelisierung der Lade- bzw. Entladevorgänge beim Abblocken möglich, bei der insbesondere der Träger des Ladesystems an der jeweiligen Station (Übergabestation bzw. Ladestation) der Abblockvorrichtung nur wenig bewegt werden muss, was einer hohen Dynamik und einem großen Durchsatz an optischen Werkstücken förderlich ist.

Hierbei hat die Übergabestation der Abblockvorrichtung vorzugsweise ein Förderband zum Transport von Rezeptkästen in einer Transportrichtung, wobei die Rezeptkästen der Aufnahme von auf Blockstücken aufgeblockten optischen Werkstücken und/ oder abgeblockten optischen Werkstücken und/oder Blockstücken dienen. Es ist aber auch möglich, ohne Rezeptkästen und Förderband zu arbeiten, etwa mit anderen Werkstück- oder Blockstückträgern zum Tragen von einzelnen optischen Werkstücken im geblockten oder abgeblockten Zustand und/oder anderen Fördermitteln, wie zum Beispiel einer Ketten- oder Karussellfördereinrichtung, oder mit einer bloßen Ablagemöglichkeit für die optischen Werkstücke und/oder die Blockstücke.

Bei einer Ausgestaltung der Abblockvorrichtung mit Förderband und Rezeptkästen kann schließlich vorgesehen sein, dass der zweite Halter für die abgeblockten optischen Werkstücke quer zu der Transportrichtung des Förderbands gesehen neben dem dritten Halter für die Blockstücke liegt. Auch dies ist vorteilhaft einer Parallelisierung der Lade- bzw. Entladevorgänge - insbesondere ohne die Notwendigkeit einer Förderbandbewegung - und somit einem großen Durchsatz an optischen Werkstücken dienlich.

### KURZE BESCHREIBUNG DER ZEICHNUNGEN

Im Folgenden wird die Erfindung anhand eines bevorzugten Ausführungsbeispiels unter Bezugnahme auf die beigefügten, teilweise vereinfachten bzw. schematischen und nicht maßstabsgerechten Zeichnungen näher erläutert. In den Zeichnungen zeigen:
- Fig. 1: eine perspektivische Ansicht einer Abblockvorrichtung zum Abblocken von optischen Werkstücken, namentlich Brillengläsern, von zugeordneten Blockstücken von schräg oben / vorne links, mit einem erfindungsgemäßen Ladesystem in einem oberen Bereich, mittels dessen die auf Blockstücken aufgeblockten Brillengläser bzw. die abgeblockten Brillengläser und Blockstücke zwischen einer Übergabestation und einer Ladestation der Abblockvorrichtung transportiert und in die bzw. aus der jeweilige(n) Station eingelegt bzw. entnommen werden können;
- Fig. 2: eine perspektivische Ansicht der Abblockvorrichtung gemäß Fig. 1 von schräg oben / vorne rechts;
- Fig. 3: eine Draufsicht auf die Abblockvorrichtung gemäß Fig. 1, in der sich ein in einer Bewegungsebene x-y über Hförmig angeordnete Linearführungseinheiten bewegbarer Träger des Ladesystems mit quer zur Bewegungsebene x-y bewegbaren Haltern für die Brillengläser und Blockstücke über einem Förderband der Übergabestation befindet, welches für den Transport von Rezeptkästen zur Aufnahme der Brillengläser und Blockstücke im geblockten bzw. abgeblockten Zustand vorgesehen ist;
- Fig. 4: eine perspektivische Ansicht des von der Abblockvorrichtung gemäß Fig. 1 separierten Ladesystems der Abblockvorrichtung von schräg oben / vorne rechts;
- Fig. 5: eine teilweise aufgebrochene Draufsicht auf das in Fig. 4 isoliert gezeigte Ladesystem der Abblockvorrichtung gemäß Fig. 1, ohne Ventilinsel am Träger, insbesondere zur Veranschaulichung des Verlaufs eines Zahnriemens als Zugglied für die Bewegung des Trägers, das in einer H- Form um Umlenkungen geführt an den Linearführungseinheiten bewegbar angeordnet und am Träger befestigt ist;
- Fig. 6: eine Schnittansicht des Ladesystems der Abblockvorrichtung gemäß Fig. 1 entsprechend der Schnittverlaufslinie VI-VI in Fig. 5;
- Fig. 7: eine zu beiden Seiten hin abgebrochene, in der Zeichnungsebene um 90° entgegen dem Uhrzeigersinn verdrehte Schnittansicht des Ladesystems der Abblockvorrichtung gemäß Fig. 1 entsprechend der Schnittverlaufslinie VII-VII in Fig. 5;
- Fig. 8: eine perspektivische Ansicht des als Y-Schlitten ausgebildeten, vom in Fig. 4 gezeigten Ladesystem der Abblockvorrichtung gemäß Fig. 1 separierten Trägers des Ladesystems von schräg oben / vorne rechts, mit drei quer zur Bewegungsebene x-y bewegbaren Haltern für die Brillengläser und Blockstücke;
- Fig. 9: eine Seitenansicht des Trägers gemäß Fig. 8 mit den Haltern von rechts in Fig. 8;
- Fig. 10: eine Schnittansicht des Trägers gemäß Fig. 8 mit den Haltern entsprechend der 2-fach versetzten Schnittverlaufslinie X-X in Fig. 9;
- Fig. 11: eine perspektivische Ansicht des in Fig. 8 vorderen, als Mehrfingergreifer ausgebildeten Halters von schräg oben / vorne rechts, der mit einem zugeordneten Pneumatikzylinder nebst Führung und einem zugeordneten Schwenkmechanismus vom Träger gemäß Fig. 8 separiert dargestellt ist;
- Fig. 12: eine Seitenansicht des Pneumatikzylinders mit Führung und des Schwenkmechanismus, die dem Halter gemäß Fig. 11 zugeordnet sind, von links in Fig. 11, ohne den Halter;
- Fig. 13: eine Schnittansicht des Pneumatikzylinders mit Führung und des Schwenkmechanismus für den Halter gemäß Fig. 11 entsprechend der Schnittverlaufslinie XIII-XIII in Fig. 12; und
- Fig. 14: bis Fig. 35 perspektivische Ansichten der Abblockvorrichtung gemäß Fig. 1, die einen möglichen, vollautomatischen Abblockprozess unter Zuhilfenahme des erfindungsgemäßen Ladesystems in dessen zeitlichem Ablauf illustrieren, wobei zur Vereinfachung der Darstellung das Zugglied für den Antrieb des Trägers nebst Umlenkungen weggelassen wurde.

Zu den Zeichnungen sei an dieser Stelle noch angemerkt, dass die Darstellung der Abblockvorrichtung mit dem erfindungsgemäßen Ladesystem in einem rechtwinkligen kartesischen Koordinatensystem erfolgt, in welchem der Buchstabe x die Längenrichtung, der Buchstabe y die Breitenrichtung und der Buchstabe z die Höhenrichtung der Abblockvorrichtung bzw. des Ladesystems bezeichnet. In den Zeichnungen wurden zur Freigabe der Sicht auf wesentliche Bauteile bzw. Baugruppen der Abblockvorrichtung und des Ladesystems und zur Vereinfachung der Darstellung zumeist insbesondere auch Teile der Verkleidung, die Versorgungseinrichtungen (einschließlich Leitungen, Schläuche und Rohre) für Strom, Druckluft und Wasser als Druckmittel, die Absaugung sowie die Mess-, Wartungs- und Sicherheitseinrichtungen weggelassen, weil sie für das Verständnis der Erfindung nicht erforderlich erscheinen und dem Fachmann ohnehin geläufig sind.

### DETAILLIERTE BESCHREIBUNG DES AUSFÜHRUNGSBEISPIELS

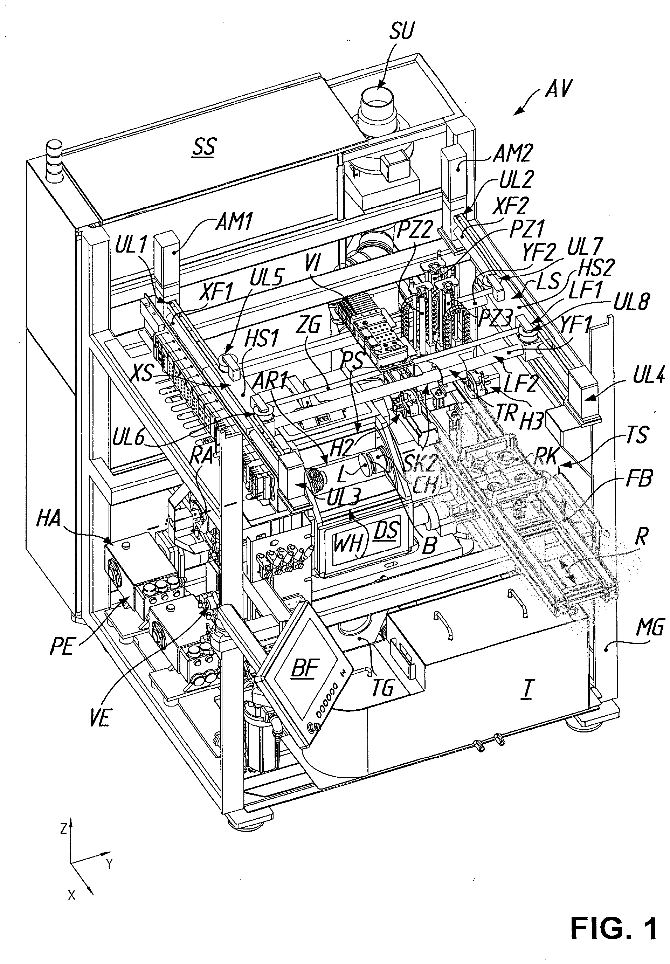

In den Fig. 1 bis 3 und 14 bis 35 ist - beispielhaft für eine Optikmaschine zum Behandeln und/oder Bearbeiten von optischen Werkstücken - eine Abblockvorrichtung zum Abblocken von optischen Werkstücken, wie Brillengläsern L, von zugeordneten Blockstücken B allgemein mit dem Bezugszeichen AV beziffert. Die Abblockvorrichtung AV hat ein Maschinengestell MG, an dem als Kernstück der Abblockvorrichtung AV an zentraler Stelle eine besonders ausgebildete Werkstück-Halteanordnung WH bewegbar gelagert ist, die nachfolgend noch insoweit beschrieben wird, als es für ein besseres Verständnis der vorliegenden Erfindung wünschenswert erscheint.

Der grundlegende Aufbau der Abblockvorrichtung AV und insbesondere der Werkstück-Halteanordnung WH ist Gegenstand der parallel, d.h. mit gleichem Anmeldetag unter dem Titel "Optikmaschine für das Behandeln und/oder Bearbeiten von optischen Werkstücken, wie Brillengläsern, sowie Abblockvorrichtung und Abblockverfahren hierfür" eingereichten deutschen Patentanmeldung DE 10 2019 006 504.2 (nachfolgend Parallelanmeldung genannt), auf die an dieser Stelle hinsichtlich der genaueren Struktur und der Funktion der Abblockvorrichtung AV im Allgemeinen und der Werkstück-Halteanordnung WH im Speziellen zur Vermeidung von Wiederholungen ausdrücklich verwiesen sei.

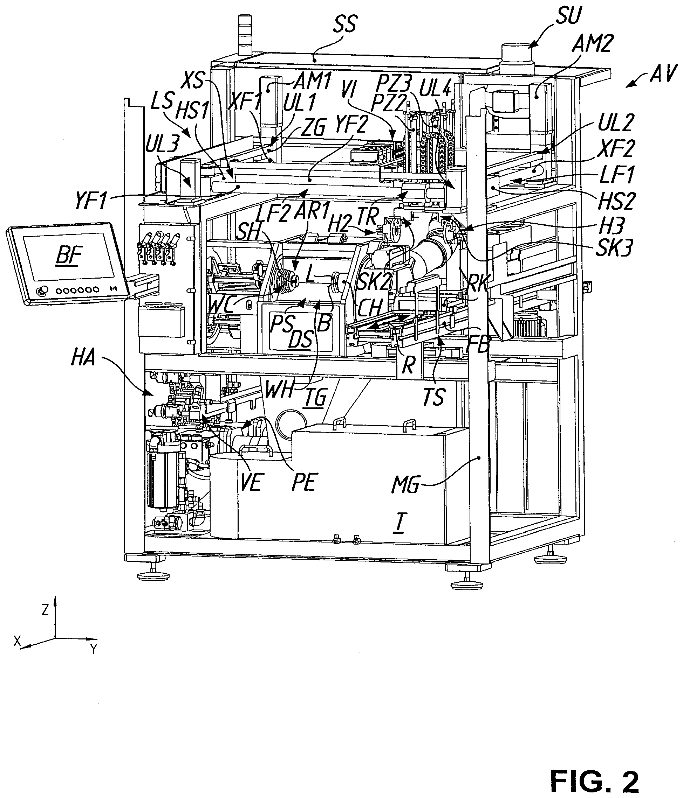

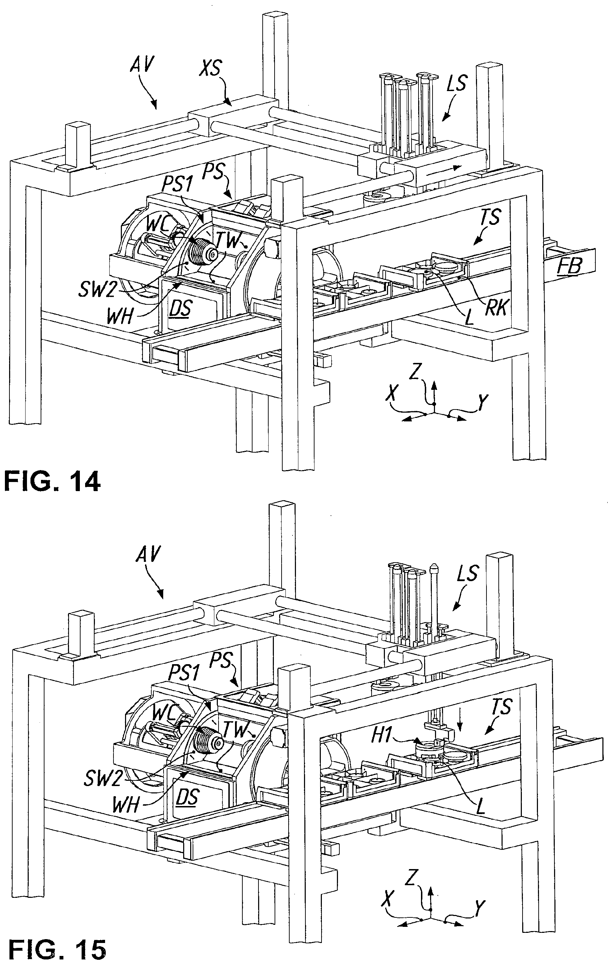

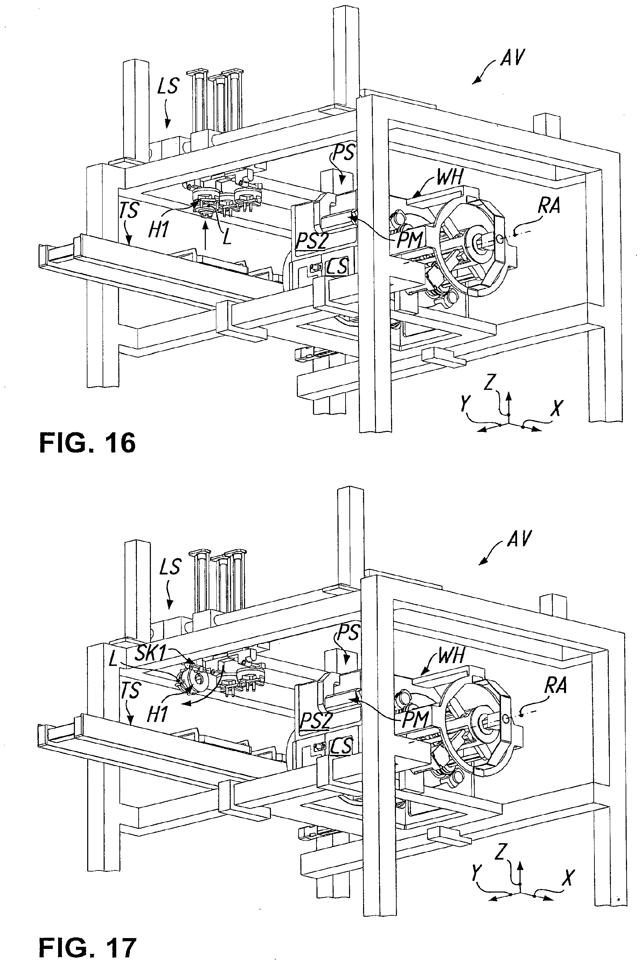

Wie am besten in den Fig. 14 bis 35 zu erkennen ist, sind um die Werkstück-Halteanordnung WH herum verschiedene Stationen der Abblockvorrichtung AV am Maschinengestell MG ortsfest gruppiert. Hierbei handelt es sich zunächst um eine oben liegende Ladestation PS (siehe insbesondere die Fig. 14, 15 und 20 bis 35), umfassend eine erste Teilstation PS1 (oben vorne) zum Beladen von auf Blockstücken B aufgeblockten Brillengläsern L vor dem Abblocken und zum Entladen von Blockstücken B nach dem Abblocken sowie eine zweite Teilstation PS2 (oben hinten) zum Entladen von abgeblockten Brillengläsern L nach dem Abblocken. Mit einem räumlichen Abstand zur Ladestation PS sind unterhalb der Ladestation PS eine Abblockstation DS (unten vorne; vgl. z.B. die Fig. 1 und 2) als erste Behandlungsstation zum Abblocken der Brillengläser L vom jeweils zugeordneten Blockstück B und eine Reinigungsstation CS (unten hinten; siehe insbesondere die Fig. 16 bis 19) als weitere Behandlungsstation zum Reinigen der abgeblockten Brillengläser L und der Blockstücke B am Maschinengestell MG montiert.

Die Abblockstation DS hat - wie in der vorgenannten deutschen Parallelanmeldung gezeigt, hier jedoch nicht - als eine erste Behandlungseinrichtung eine erste Düsenbaugruppe mit einer ersten Hochdruckdüse für die Abgabe eines Druckmittel-Hochdruckstrahls zum Abblocken der Brillengläser L vom jeweils zugeordneten Blockstück B. Die Reinigungsstation CS umfasst - wiederum hier nicht dargestellt, aber in der vorgenannten deutschen Parallelanmeldung gezeigt - als eine zweite Behandlungseinrichtung eine zweite Düsenbaugruppe mit einer zweiten Hochdruckdüse für die Abgabe eines Druckmittel-Hochdruckstrahls zum Reinigen der abgeblockten Brillengläser L sowie als eine dritte Behandlungseinrichtung eine dritte Düsenbaugruppe mit einer dritten Hochdruckdüse für die Abgabe eines Druckmittel-Hochdruckstrahls zum Reinigen der Blockstücke B.

Die hydraulische Versorgung der vorgenannten Düsenbaugruppen erfolgt über eine Hydraulikanordnung HA, die gemäß den Fig. 1 und 2 in einem unteren Bereich, seitlich unterhalb der Werkstück-Halteanordnung WH am Maschinengestell MG montiert ist. Diese Hydraulikanordnung HA umfasst allgemein eine Pumpeneinrichtung PE, mittels der temperiertes Wasser als Druckmittel aus einem Tank T über eine Verteilereinrichtung VE der Hydraulikanordnung HA zu den Düsenbaugruppen gefördert werden kann. Außerdem sind an die Hydraulikanordnung Niederdruckdüsen - wiederum hier nicht gezeigt, aber in der vorerwähnten deutschen Parallelanmeldung dargestellt - angeschlossen, die zur Reinigung der Abblockstation DS und der Reinigungsstation CS dienen.

Diese Hydraulikanordnung HA ist Gegenstand der parallel, d.h. mit gleichem Anmeldetag unter dem Titel "Hydraulikanordnung für eine Vorrichtung zum Abblocken von optischen Werkstücken, insbesondere Brillengläsern, von zugeordneten Blockstücken" eingereichten deutschen Patentanmeldung DE 10 2019 006 505.0, auf die an dieser Stelle hinsichtlich des genaueren Aufbaus und der Funktion der Hydraulikanordnung HA zur Vermeidung von Wiederholungen ausdrücklich verwiesen sei.

Auf etwa gleicher Höhe wie die Werkstück-Halteanordnung WH ist in den Fig. 1 und 2 rechts neben der Werkstück-Halteanordnung WH eine Übergabestation TS für die Ablage von auf Blockstücken B aufgeblockten Brillengläsern L, abgeblockten Brillengläsern L und Blockstücken B angeordnet. Im dargestellten Ausführungsbeispiel weist die Übergabestation TS der Abblockvorrichtung AV ein am Maschinengestell MG montiertes Förderband FB zum Transport von Rezeptkästen RK in einer Transportrichtung R auf. Die Rezeptkästen RK dienen der Aufnahme von auf Blockstücken B aufgeblockten Brillengläsern L, abgeblockten Brillengläsern L und Blockstücken B.

Oberhalb der Werkstück-Halteanordnung WH und der Übergabestation TS ist am Maschinengestell MG ein nachfolgend noch ausführlich beschriebenes Ladesystem LS montiert, mittels dessen die auf Blockstücken B aufgeblockten Brillengläser L, abgeblockte Brillengläser L und abgeblockte Blockstücke B zwischen der Übergabestation TS und der an der Werkstück-Halteanordnung WH vorgesehenen Ladestation PS mit ihren Teilstationen PS1, PS2 transportiert und in die bzw. aus der jeweilige(n) Station TS, PS1, PS2 eingelegt bzw. entnommen werden können.

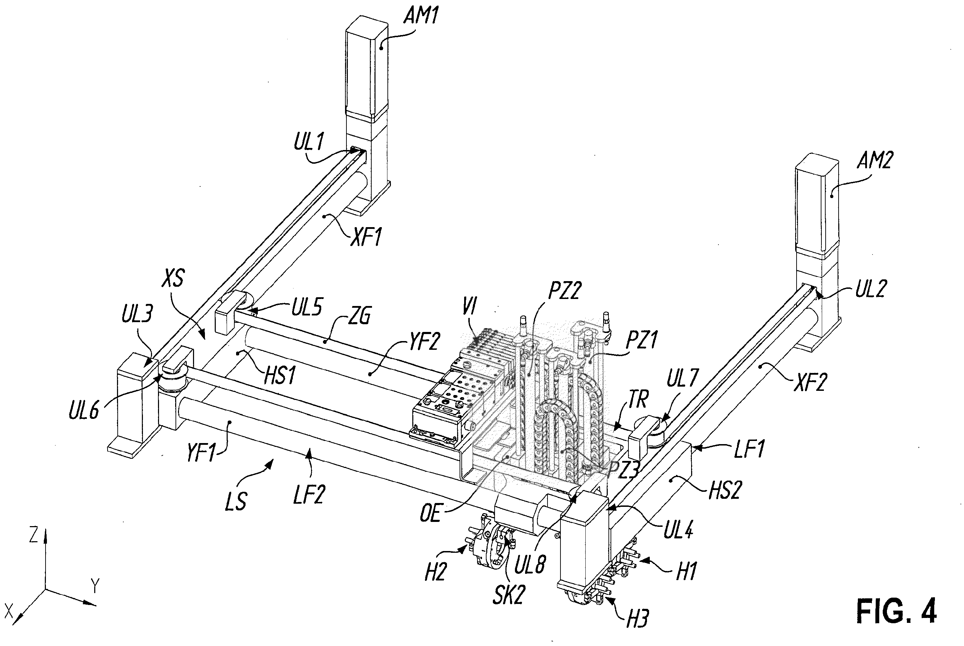

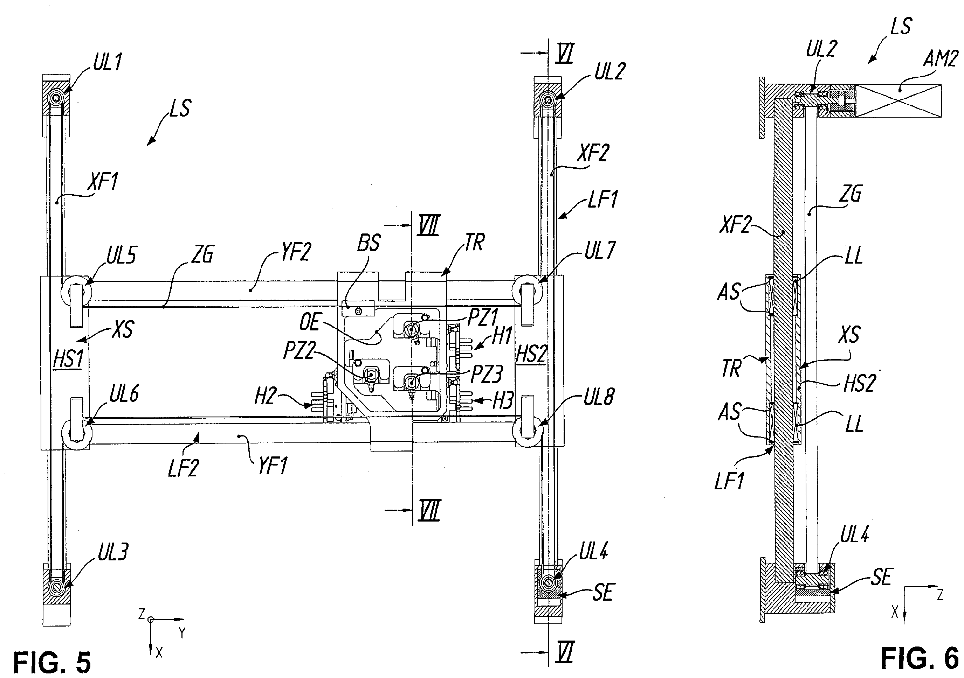

Das Ladesystem LS umfasst allgemein, wie insbesondere die Fig. 4 und 5 zeigen, einen in einer Bewegungsebene x-y über zwei Linearführungseinheiten LF1, LF2 bewegbaren Träger TR, der drei in einer Querrichtung z zur Bewegungsebene x-y bewegbare Halter H1, H2, H3 trägt. Von diesen ist ein erster Halter H1 (in den Fig. 1 und 2 verdeckt) den auf Blockstücken B aufgeblockten Brillengläsern L, ein zweiter Halter H2 den abgeblockten Brillengläsern L und ein dritter Halter H3 den Blockstücken B zugeordnet.

Eine Besonderheit dieses Ladesystems LS besteht darin, dass - wie nachfolgend noch im Detail erläutert wird - die Linearführungseinheiten LF1, LF2 in der Art eines H-Portals ausgebildet und angeordnet sind, mit zwei ortsfesten Antriebsmotoren AM1, AM2 für den gleich- oder gegensinnigen Antrieb eines Zugglieds ZG, das in einer H-Form an den Linearführungseinheiten LF1, LF2 bewegbar angeordnet und am Träger TR befestigt ist.

Die Fig. 1 und 2 zeigen des Weiteren einen hinter dem Maschinengestell MG angeordneten Schaltschrank SS für die Abblockvorrichtung AV sowie eine rechts daneben platzierte Absaugung SU, die an die zweite Teilstation PS2 der Ladestation PS und die Reinigungsstation CS angeschlossen ist. Unterhalb der Abblock- und Reinigungsstationen DS, CS - die selbst für eine bestmögliche Ableitung des im Prozess benötigten Wassers unterhalb der Ladestation PS positioniert sind - ist ein trichterförmiger Gehäuseabschnitt TG zum gemeinsamen Sammeln von Druckmittel, Blockmaterial und sonstigen Rückständen zur Aufbereitung bzw. Entsorgung angeordnet, wie in den Fig. 1 und 2 zu sehen ist. In den Fig. 1 und 2 vorne links ist schließlich ein Bedienfeld BF am Maschinengestell MG befestigt, über das die Abblockvorrichtung AV gesteuert werden kann.

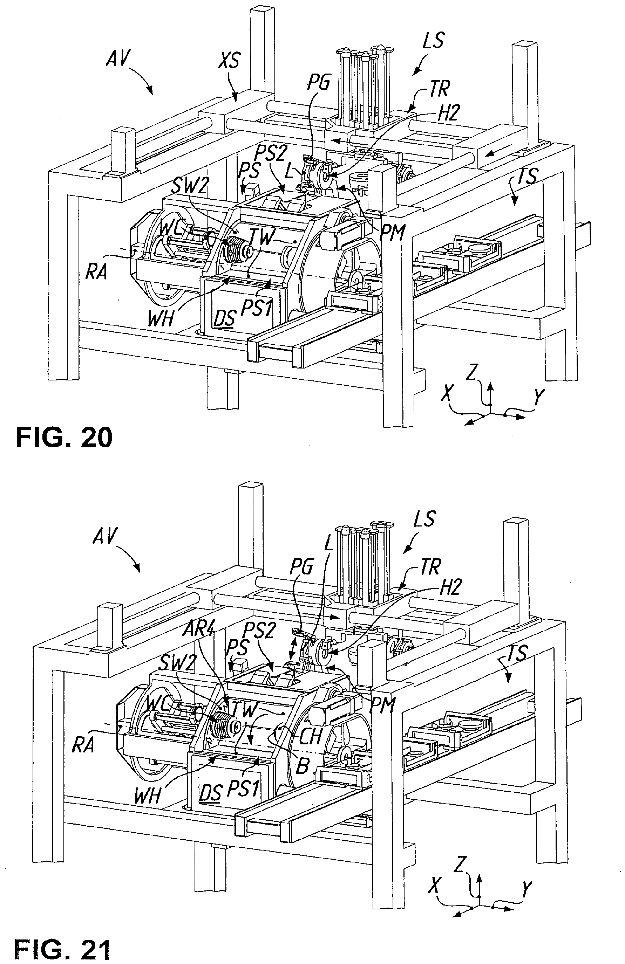

Bevor das Ladesystem LS im Detail beschrieben wird, soll zunächst noch das Maschinenkonzept der Abblockvorrichtung AV mit der vorerwähnten Werkstück-Halteanordnung WH kurz erläutert werden. Eine Besonderheit der Werkstück-Halteanordnung WH besteht darin, dass die Werkstück-Halteanordnung WH eine Mehrzahl von Trennwänden TW aufweist (beispielhaft in den Fig. 14, 15, 20 und 21 gekennzeichnet), die vier Arbeitsräume AR1, AR2, AR3, AR4 voneinander trennen und begrenzen, von denen in den Fig. 1 bis 3, 14, 15 und 20 lediglich der erste Arbeitsraum AR1 und in den Fig. 21 bis 35 nur der vierte Arbeitsraum AR4 zu sehen ist (in diesen Figuren auch durch die jeweils stirnseitig angebrachten römischen Ziffern I I bzw. IV IV gekennzeichnet). Dabei ist zur parallelen Nutzung für verschiedene Brillengläser L jedem der Arbeitsräume AR1, AR2, AR3, AR4 ein eigener Werkstückhalter CH zugeordnet, wie z.B. die Fig. 1 bis 3 zeigen, hier jeweils in der Form einer Spannzange.

Die Arbeitsräume AR1, AR2, AR3, AR4 können mit der Werkstück-Halteanordnung WH gemeinsam bezüglich des Maschinengestells MG bewegt werden, so dass jeder Arbeitsraum AR1, AR2, AR3, AR4 wahlweise von der am Maschinengestell MG ortsfesten Ladestation PS zu den hiervon räumlich beabstandeten Behandlungs- bzw. Bearbeitungsstationen DS, CS verlagert werden kann und umgekehrt. Genauer gesagt kann jeder Arbeitsraum AR1, AR2, AR3, AR4 mit der Werkstück-Halteanordnung WH in einem Bewegungszyklus (durch einen zentralen Rundpfeil in Fig. 21 angedeutet) von der ersten Teilstation PS1 der Ladestation PS über die Abblockstation DS, die Reinigungsstation CS und die zweite Teilstation PS2 der Ladestation PS wieder zur ersten Teilstation PS1 der Ladestation PS verlagert werden, so dass die Arbeitsräume AR1, AR2, AR3, AR4 für verschiedene Brillengläser L und unterschiedliche Vorgänge (Beladen, Abblocken, Reinigen, Entladen) zeitgleich genutzt werden können.

Hierfür sind die Arbeitsräume AR1, AR2, AR3, AR4 der Werkstück-Halteanordnung WH mit ihren Werkstückhaltern CH um eine gemeinsame Drehachse RA (siehe hierzu die Fig. 1 und 3 sowie 16 bis 35) drehbar angeordnet. Insgesamt ergibt sich eine trommelartige Ausbildung der Werkstück-Halteanordnung WH, mit zwei einander gegenüberliegenden Stirnwänden SW1, SW2 (in den Fig. 14, 15, 20, 21 und 32 bis 35 gekennzeichnet), zwischen denen die die Arbeitsräume AR1, AR2, AR3, AR4 separierenden Trennwände TW angeordnet sind. Hierbei verläuft die Drehachse RA durch die zueinander parallelen Stirnwände SW1, SW2.

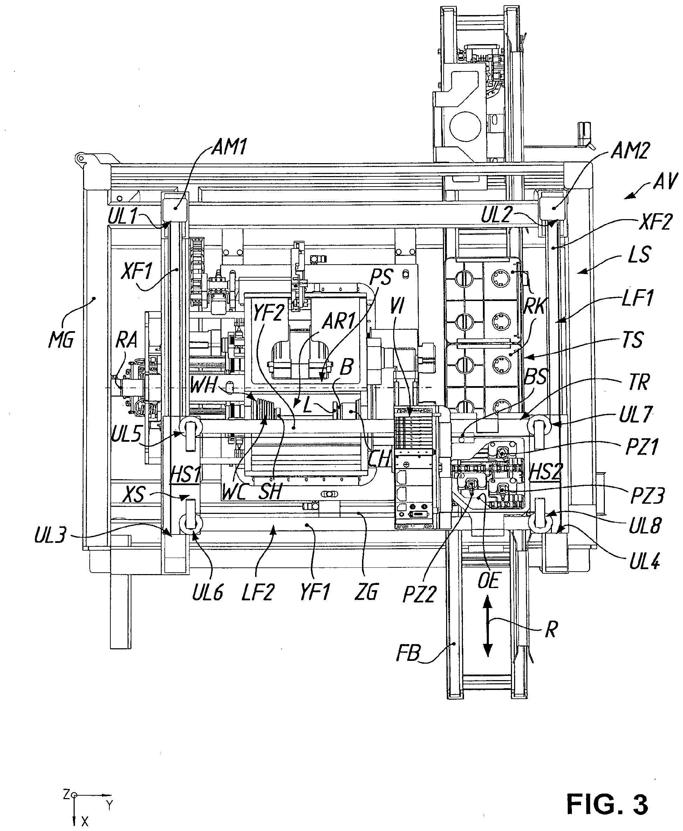

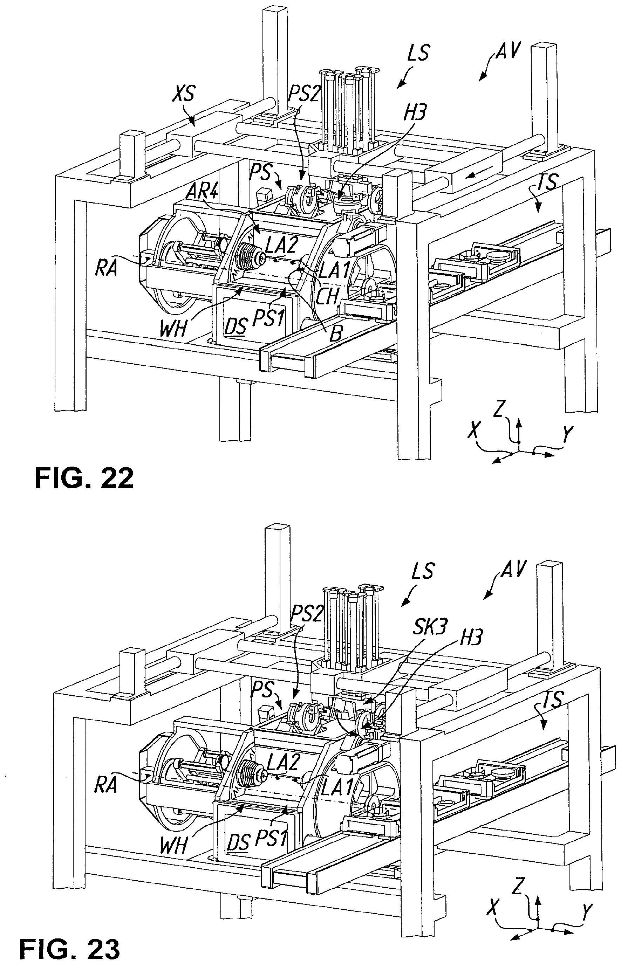

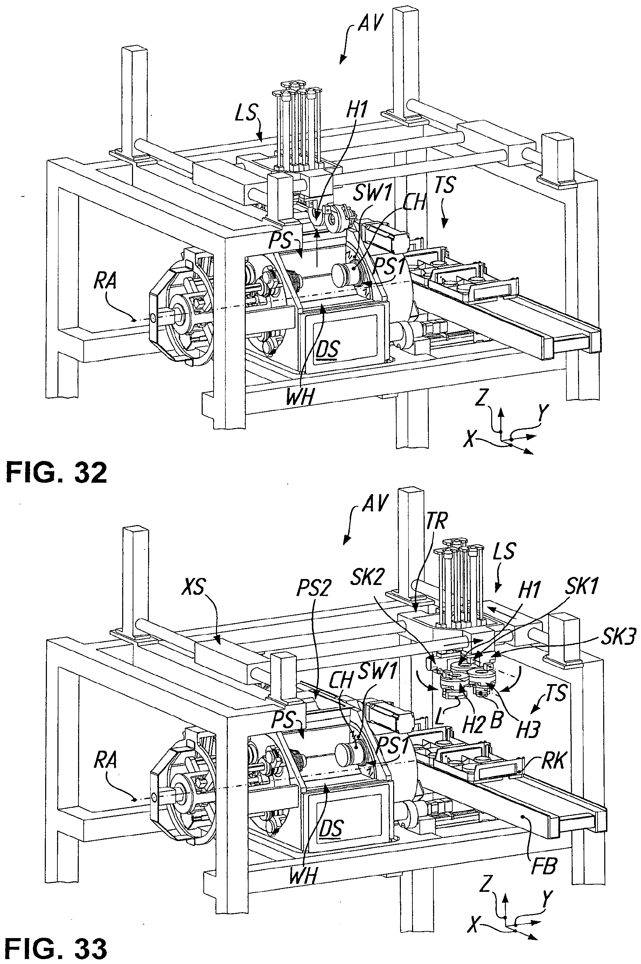

Während eine erste Stirnwand SW1 der trommelartig ausgestalteten Werkstück-Halteanordnung WH die Werkstückhalter CH trägt, wie beispielsweise in den Fig. 32 bis 35 gut zu erkennen ist, trägt eine zweite Stirnwand SW2 der Werkstück-Halteanordnung WH gemäß z.B. den Fig. 14, 15, 20 und 21 Werkstückgegenhalter WC, die mit den Werkstückhaltern CH ausgefluchtet sind. Sowohl die Werkstückhalter CH als auch die Werkstückgegenhalter WC sind ferner jeweils um ihre Längsachse LA1 bzw. LA2 (in den Fig. 22, 23, 34 und 35 gekennzeichnet) drehbar gelagert. Mit anderen Worten gesagt ergibt sich eine zirkulare Anordnung von vier Spindelpaaren, die um die Drehachse RA gleichmäßig voneinander winkelbestandet sind. Zudem sind die Werkstückgegenhalter WC jeweils entlang ihrer Längsachse LA2 parallel zur Drehachse RA axial verlagerbar. Hierbei sind die Werkstückgegenhalter WC jeweils an ihrem in den jeweiligen Arbeitsraum AR1, AR2, AR3, AR4 hineinragenden Ende mit einem Saugkopf SH zum Halten des Brillenglases L versehen, wie z.B. die Fig. 2 und 3 zeigen.

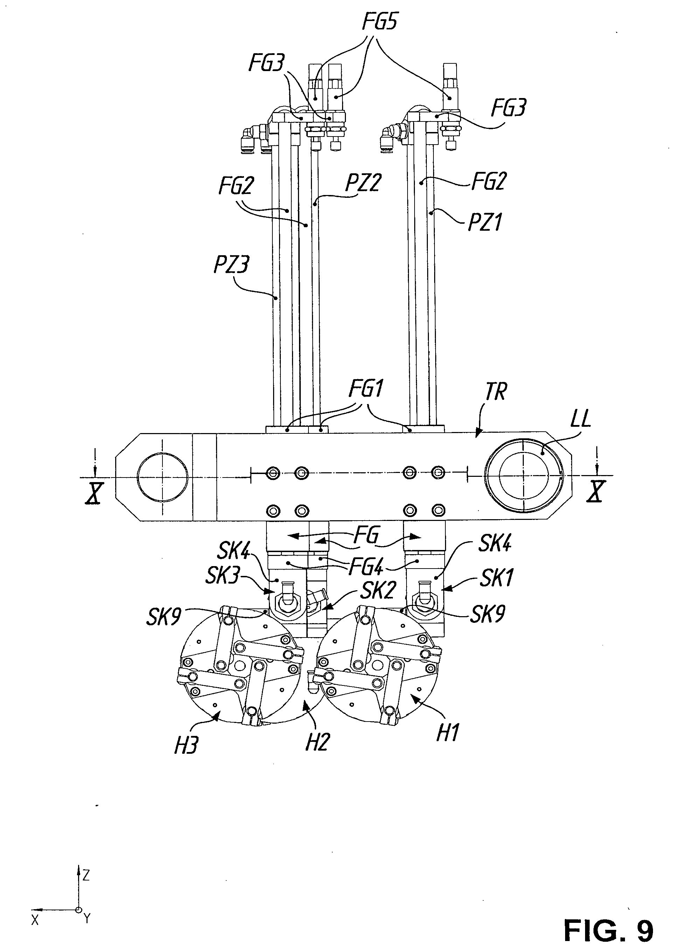

Weitere Einzelheiten des Ladesystems LS sind nun insbesondere den Fig. 5 bis 10 zu entnehmen. Wie zunächst in den Fig. 4 und 5 gut zu erkennen ist, weist die eine Linearführungseinheit LF1 für die x-Richtung zwei parallel zueinander verlaufende x-Führungsglieder XF1, XF2 auf. Die x-Führungsglieder XF1, XF2 sind gemäß z.B. den Fig. 1 und 2 ortsfest am Maschinengestell MG montiert. Wie insbesondere die Fig. 4 und 6 zeigen, handelt es sich bei den x-Führungsgliedern XF1, XF2 um massive Führungsstangen mit einem runden Querschnitt.

An den x-Führungsgliedern XF1, XF2 ist jeweils ein x-Halbschlitten HS1, HS2 längsverschieblich geführt. Hierzu ist jeder x-Halbschlitten HS1, HS2 - wie im Schnitt gemäß Fig. 6 für den x-Halbschlitten HS2 dargestellt - mit zwei axial voneinander beabstandeten Linearlagerelementen LL versehen, die mit der jeweils als x-Führungsglied XF1, XF2 zugeordneten Führungsstange zusammenwirken.

Die andere Linearführungseinheit LF2 für die y-Richtung hingegen hat gemäß insbesondere den Fig. 4 und 5 zwei parallel zueinander und quer zu den x-Führungsgliedern XF1, XF2 verlaufende y-Führungsglieder YF1, YF2. Die y-Führungsglieder YF1, YF2 verbinden die x-Halbschlitten HS1, HS2 starr miteinander, so dass die x-Halbschlitten HS1, HS2 und die y-Führungsglieder YF1, YF2 gemeinsam einen x-Schlitten XS bilden.

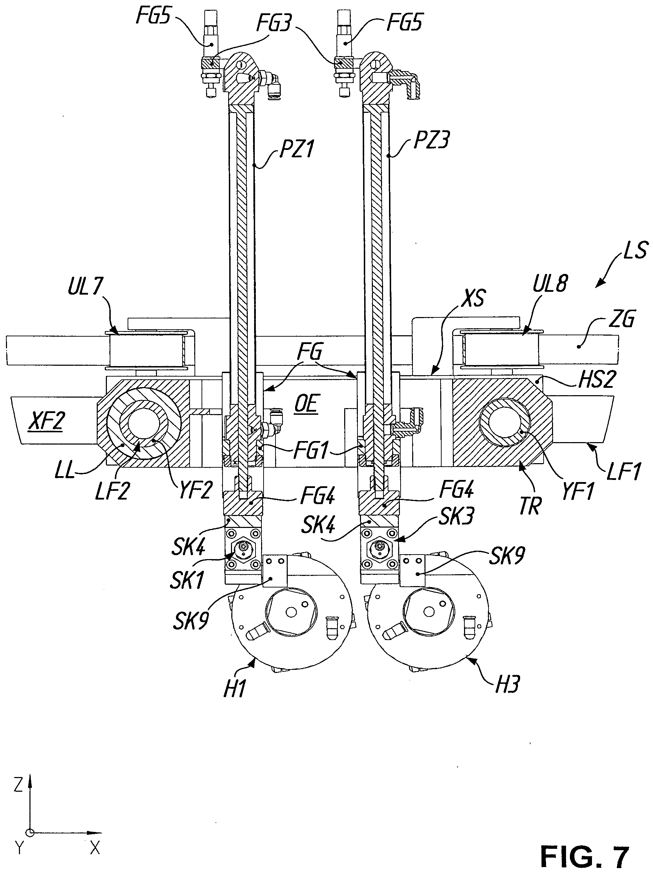

Wie am besten im Schnitt gemäß Fig. 7 zu sehen ist, handelt es sich auch bei den y-Führungsgliedern YF1, YF2 um Führungsstangen mit einem runden Querschnitt. Anders als die x-Führungsglieder XF1, XF2 sind die y-Führungsglieder YF1, YF2 allerdings als Hohlkörper ausgebildet, also rohrförmig. Durch Verwendung der Führungsstangen werden hohe Nutzlasten erzielt; die Hohlkörperausbildung sorgt hierbei für ein geringes Gewicht und ist einer hohen Dynamik förderlich.

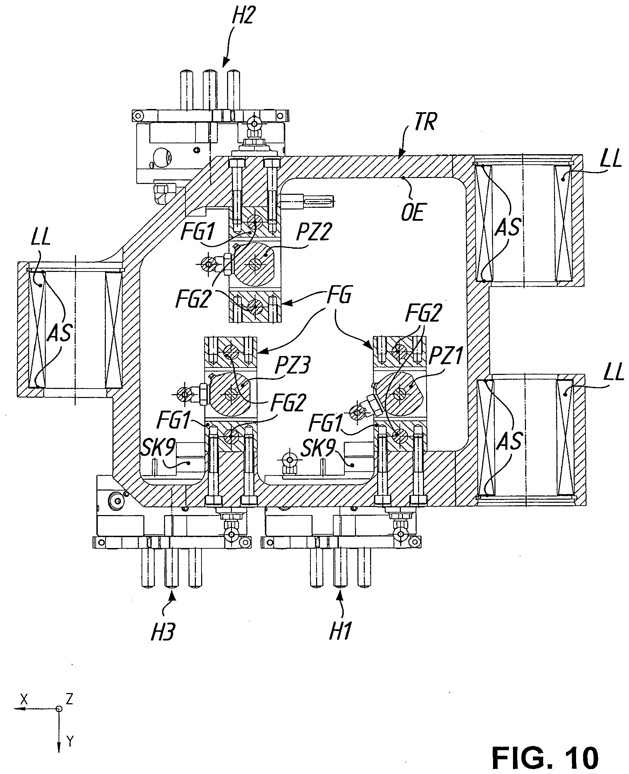

An den y-Führungsgliedern YF1, YF2 ist der vorerwähnte Träger TR als y-Schlitten längsverschieblich geführt. Hierfür weist der Träger TR gemäß Fig. 10 drei voneinander beabstandete Linearlagerelemente LL auf, von denen zwei Linearlagerelemente LL mit dem einen als Führungsstange ausgebildeten y-Führungsglied YF2 zusammenwirken, während das andere Linearlagerelement LL mit dem anderen als Führungsstange ausgebildeten y-Führungsglied YF1 zusammenwirkt. Damit ergibt sich eine statisch bestimmte Lagerung des als y-Schlitten ausgebildeten Trägers TR an den y-Führungsgliedern YF1, YF2.

Sowohl bei den jeweils zwei Linearlagerelementen LL an den x-Halbschlitten HS1, HS2 als auch bei den drei Linearlagerelementen LL an dem als y-Schlitten ausgebildeten Träger TR handelt es sich um Kugelbuchsen. Jedem der Linearlagerelemente LL ist hierbei zu beiden Längsseiten ein Abstreifer AS zugeordnet, wie dies in den Fig. 6 und 10 schematisch dargestellt ist.

Zu erwähnen ist in diesem Zusammenhang, dass das Ladesystem LS bei dem hier beschriebenen Einsatzfall in bzw. an der Abblockvorrichtung AV besonderen Einsatzbedingungen ausgesetzt ist. Durch die Abblock- und Reinigungsprozesse mit Hochdruck (Wasser als Medium mit einer Temperatur von bis zu 50° Celsius) entsteht extrem viel Luftfeuchtigkeit in der Abblockvorrichtung AV. Diese Luftfeuchtigkeit setzt sich auf allen Bauteilen ab. Die vorbeschriebene Ausgestaltung des Führungssystems umfassend Rundenstangen und Kugelbuchsen mit Abstreifern hat sich hier insofern als vorteilhaft erwiesen, als das Ladesystem LS neben den mechanischen und dynamischen Belastungen auch diesen Umgebungsbedingungen dauerhaft standzuhalten vermag.

Durch die vorbeschriebene Anordnung der Linearführungseinheiten LF1, LF2 ergibt sich im Wesentlichen eine H-Form, wie in Fig. 5 gut zu erkennen ist. Komplettiert wird das so gebildete H-Portal durch Umlenkungen und Antriebe für das Zugglied ZG. Genauer gesagt sind gemäß insbesondere Fig. 5 jedem der ortsfesten x-Führungsglieder XF1, XF2 zwei endseitig angeordnete 180°-Umlenkungen UL1, UL2, UL3, UL4 für das Zugglied ZG zugeordnet. Jeder der x-Halbschlitten HS1, HS2 hingegen trägt zwei 90°-Umlenkungen UL5, UL6, UL7, UL8 für das Zugglied ZG. Hierbei ist, wie die Fig. 4 veranschaulicht, eine (UL1) der 180°-Umlenkungen UL1, UL3 an dem einen, in Fig. 4 linken x-Führungsglied XF1 durch einen (AM1) der ortsfesten Antriebsmotoren AM1, AM2 antreibbar. Unabhängig davon ist die andere (UL2) der 180°-Umlenkungen UL2, UL4 an dem anderen, in Fig. 4 rechten x-Führungsglied XF2 durch den anderen (AM2) der ortsfesten Antriebsmotoren AM1, AM2 antreibbar.

Im dargestellten Ausführungsbeispiel handelt es sich bei dem Zugglied ZG um einen Zahnriemen. Zumindest die hierfür an den ortsfesten Antriebsmotoren AM1, AM2 vorgesehenen, durch diese angetriebenen Umlenkungen LJL1 und UL2 sind durch entsprechend gezahnte Riemenscheiben gebildet. Durch die somit bewirkte formschlüssige, mithin schlupflose Bewegungsübertragung ist eine exakte Steuerung der Bewegung des Trägers TR möglich.

Insbesondere der Fig. 5 ist in diesem Zusammenhang noch zu entnehmen, dass das Zugglied ZG an dem Träger TR an einer Befestigungsstelle BS (Riemenklemmung) befestigt ist, die nahe den zwei Linearlagerelementen LL sitzt, welche beide mit dem einen als Führungsstange ausgebildeten y-Führungsglied YF2 zusammenwirken. Hierdurch werden der Genauigkeit ggf. abträgliche Kippmomente am Träger TR vermieden.

Außerdem ist in Fig. 5 unten rechts und Fig. 6 unten noch angedeutet, dass die 180°-Umlenkung UL4 an dem x-Führungsglied XF2 mit einer Spanneinrichtung SE für das Zugglied ZG versehen ist, hier in der Form eines Lagerklotzes, der durch nicht gezeigte Stellschrauben in x-Richtung verschoben und fixiert werden kann, um das Zugglied ZG zu spannen.

In der Draufsicht gemäß Fig. 5 gesehen lassen sich somit folgende Bewegungen des Trägers TR in der Bewegungsebene x-y des H-Portals erzeugen: Werden beide 180°-Umlenkungen UL1, UL2 mit gleicher Geschwindigkeit und positiver Drehrichtung (d.h. im Uhrzeigersinn) angetrieben, so bewegt sich der Träger TR auf den y-Führungsglieder YF1, YF2 in positiver y-Richtung, d.h. in Fig. 5 nach rechts. Erfolgt der Antrieb der beiden 180°-Umlenkungen UL1, UL2 mit gleicher Geschwindigkeit und in negativer Drehrichtung (d.h. entgegen dem Uhrzeigersinn), dann bewegt sich der Träger TR auf den y-Führungsglieder YF1, YF2 in negativer y-Richtung, d.h. in Fig. 5 nach links.

Eine Bewegung des Trägers TR in positiver x-Richtung, d.h. in Fig. 5 nach unten, ergibt sich, wenn die in der Draufsicht gesehen rechte 180°-Umlenkung UL2 in negativer Drehrichtung und die in der Draufsicht gesehen linke 180°-Umlenkung UL1 in positiver Drehrichtung mit der gleichen Geschwindigkeit angetrieben werden, wodurch der x-Schlitten XS mit dem darauf angeordneten Träger TR in Fig. 5 nach unten gezogen wird. Dementsprechend wird der Träger TR bei einer Drehrichtungsumkehr an beiden 180°-Umlenkungen UL1, UL2 zusammen mit dem x-Schlitten XS in negativer x-Richtung, d.h. in Fig. 5 nach oben bewegt.

Wird nur die in der Draufsicht gesehen linke 180°-Umlenkung UL1 in positiver Drehrichtung angetrieben, während die rechte 180°-Umlenkung UL2 steht, so bewegt sich der Träger TR auf den Y-Führungsgliedern YF1, YF2 in positiver y-Richtung, während der x-Schlitten XS auf den ortsfesten x-Führungsgliedern XF1, XF2 in positiver x-Richtung verschoben wird, so dass sich der Träger TR in Summe in der Bewegungsebene x-y diagonal in positiver y-Richtung und positiver x-Richtung bewegt, d.h. in Fig. 5 nach rechts unten. Dies lässt sich durch eine Drehrichtungsumkehr an der linken 180°-Umlenkung UL1 umkehren, so dass sich der Träger TR diagonal in negativer y-Richtung und negativer x-Richtung bewegt, d.h. in Fig. 5 nach links oben.

In analoger Weise lässt sich bei feststehender linker 180°-Umlenkung UL1 eine diagonale Bewegung des Trägers TR in positiver y-Richtung und negativer x-Richtung (d.h. nach rechts oben in Fig. 5) bzw. in negativer y-Richtung und positiver x-Richtung (d.h. nach links unten in Fig. 5) erzeugen, indem die rechte 180°-Umlenkung UL2 im Uhrzeigersinn bzw. gegen den Uhrzeigersinn angetrieben wird. Darüber hinaus kann durch geeignete Überlagerung der Antriebsbewegungen mit dem Träger TR jede beliebige Bahn in der Bewegungsebene x-y des H-Portals abgefahren werden.

Weitere Details zu den Bewegungsmöglichkeiten der Halter H1, H2, H3 gegenüber dem Träger TR sind den Fig. 7 bis 13 zu entnehmen. Demgemäß sind die Halter H1, H2, H3 jeweils mittels eines zugeordneten Pneumatikzylinders PZ1, PZ2, PZ3 in der Querrichtung z zur Bewegungsebene x-y bewegbar, und zwar unabhängig voneinander. Ferner ist jeder Halter H1, H2, H3 mittels eines jeweils zugeordneten pneumatischen Schwenkmechanismus SK1, SK2, SK3 von einer mit der Querrichtung z ausgefluchteten Lage zu einer im Wesentlichen senkrecht zur Querrichtung z ausgerichteten Lage verschwenkbar ist, und umgekehrt. Auch diese Schwenkbewegungen sind unabhängig voneinander. Im dargestellten Ausführungsbeispiel ist schließlich jeder Halter H1, H2, H3 als pneumatisch betätigbarer Mehrfingergreifer ausgebildet und kann individuell, d.h. wiederum unabhängig von den anderen Haltern betätigt werden.

Zur Ansteuerung der Pneumatikzylinder PZ1, PZ2, PZ3, der pneumatischen Schwenkmechanismen SK1, SK2, SK3 und der pneumatisch betätigbaren Mehrfingergreifer H1, H2, H3 ist eine allgemein mit dem Bezugszeichen VI versehene Ventilinsel vorgesehen, die auf dem als y-Schlitten ausgebildeten Träger TR angeordnet, d.h. seitlich daran angeflanscht ist (siehe die Fig. 1 bis 4). Die Sensoren des Ladesystems LS sind an der Ventilinsel VI angeschlossen. Somit ist lediglich die Ventilinsel VI energetisch, d.h. elektrisch und pneumatisch zu versorgen; die weitere Unterverteilung an die vorerwähnten pneumatischen Verbraucher erfolgt von der Ventilinsel VI aus und fährt mit dem Träger TR mit. Es ist also nur eine geringe Anzahl von elektrischen Kabeln - Powerlink (Bus), elektrische Energie - und pneumatischen Schläuchen - Druckluft für die obigen pneumatischen Verbraucher, Steuerhilfsluft - als Zuleitungen notwendig. Die Energieführung ist entsprechend einfach, klein und leicht und somit für schnelle Beschleunigungen und Geschwindigkeiten des Ladesystems LS ausgelegt.

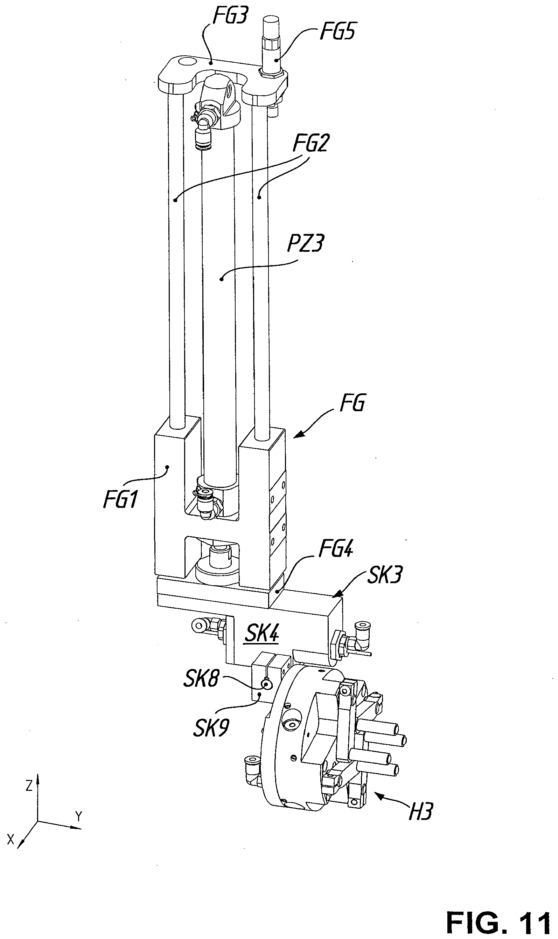

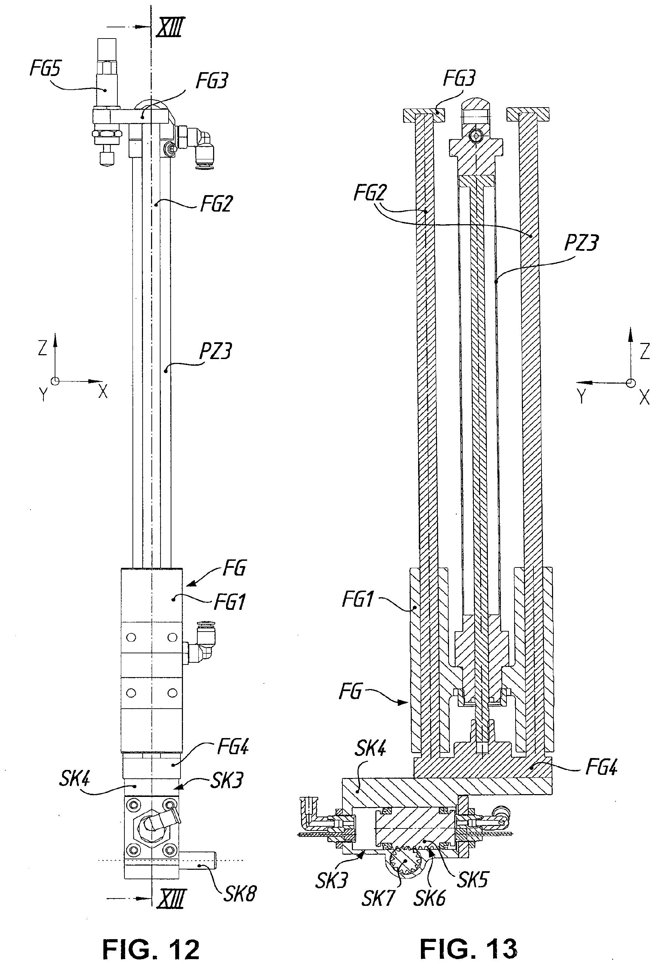

Der Träger TR selbst ist, wie insbesondere die Fig. 10 zeigt, in einer Draufsicht gesehen im Wesentlichen O-förmig ausgebildet, mit einer zentralen Öffnung OE, in der die Halter H1, H2, H3 in der Querrichtung z zur Bewegungsebene x-y bewegbar montiert sind. Genauer gesagt ist zunächst jedem der Halter H1, H2, H3 eine identisch ausgebildete Linearführung FG zugeordnet. Jede der Linearführungen FG besitzt gemäß insbesondere Fig. 11 einen im Wesentlichen H-förmigen Führungsbock FG1, der mit einer Querseite im Bereich, d.h. innerhalb der Öffnung OE mit dem Träger TR verschraubt ist, wie in Fig. 10 dargestellt. In den beiden Schenkeln des H-förmigen Führungsbocks FG1 sind in z-Richtung parallel zueinander verlaufende Führungsbohrungen ausgebildet, die jeweils von einer runden Führungsstange FG2 durchgriffen werden. Oberhalb des Führungsbocks FG1 sind die beiden Führungsstangen FG2 über eine Traverse FG3 fest miteinander verbunden; unterhalb des Führungsbocks FG1 ist eine Flanschplatte FG4 vorgesehen, die die Führungsstangen FG2 miteinander verbindet, wie z.B. die Fig. 13 lediglich schematisch zeigt. Es ist ersichtlich, dass die Führungsstangen FG2, die Traverse FG3 und die Flanschplatte FG4 eine Einheit bilden, die am Führungsbock FG1 geführt relativ zum Führungsbock FG1 in der z-Richtung bewegt werden kann.

Des Weiteren ist ein Verbindungsabschnitt zwischen den beiden Schenkeln des H-förmigen Führungsbocks FG1 gemäß Fig. 13 mit einer Durchgangsbohrung versehen. Der jeweilige doppeltwirkende Pneumatikzylinder - im Beispiel der Fig. 11 bis 13 der dritte Pneumatikzylinder PZ3 - ist gemäß den Fig. 11 und 13 mit seinem Zylindergehäuse von oben auf dem Verbindungsabschnitt des Führungsbocks FG1 angeflanscht und durchgreift mit seiner Kolbenstange die Durchgangsbohrung im Verbindungsabschnitt. Mit ihrem vom Führungsbock FG1 abgewandten, in den Fig. 11 und 13 unteren Ende ist die Kolbenstange des Pneumatikzylinders mit der Flanschplatte FG4 verschraubt, wie die Fig. 13 zeigt. Je nach Druckbeaufschlagung einer ersten oder zweiten Wirkfläche des doppeltwirkenden Pneumatikzylinders wird die Flanschplatte FG4 also mittels der Führungsstangen FG2 in der z-Richtung am Führungsbock FG1 geführt in Richtung des am Träger TR befestigten Führungsbocks FG1 (nach oben) oder von diesem weg bewegt (nach unten). Die obere Endlage der Flanschplatte FG4 ist dann erreicht, wenn der Kolben des jeweiligen Pneumatikzylinders innen an dessen Zylindergehäuse zur Anlage gelangt (siehe Fig. 7 oben). Die untere Endlage der Flanschplatte FG4 hingegen ist einstellbar definiert durch einen längenverstellbaren Anschlagdämpfer FG5, der gemäß den Fig. 7 bis 9, 11 und 12 an der Traverse FG3 der Linearführung FG montiert ist und mit einer zugeordneten Anschlagfläche am Träger TR wegbegrenzend zusammenwirkt.

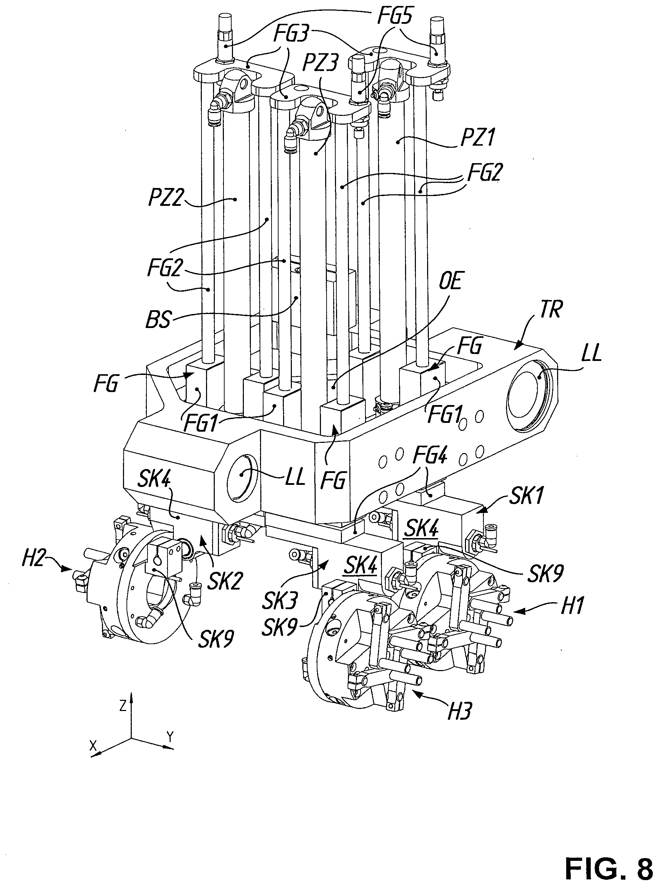

Von unten ist an jeder Flanschplatte FG4 der jeweilige pneumatische Schwenkmechanismus SK1, SK2, SK3 angeflanscht, wie die Fig. 7 bis 9 und 11 bis 13 zeigen. Details zum jeweiligen Schwenkmechanismus ergeben sich am Beispiel des dritten Schwenkmechanismus SK3 aus der Schnittansicht gemäß Fig. 13. Demnach weist der Schwenkmechanismus SK3 ein an der Flanschplatte FG4 angeflanschtes Gehäuse SK4 auf, in dem ein beidseitig mit Druck beaufschlagbarer Schwenkkolben SK5 geführt ist. An einer Längsseite des Schwenkkolbens SK5 ist eine Verzahnung SK6 in der Art einer Zahnstange ausgebildet, die mit einem Zahnrad SK7 kämmt. Das Zahnrad SK7 ist mit einer im Gehäuse SK4 drehbar gelagerten Welle SK8 verbunden, die gemäß insbesondere den Fig. 11 und 12 aus dem Gehäuse SK4 vorsteht. An dem aus dem Gehäuse SK4 vorstehenden Teil der Welle SK8 ist schließlich der Halter H3 des Ladesystems LS mittels einer Klemme SK9 befestigt, wie gut in den Fig. 8 und 11 zu erkennen ist.

Bei einer Druckbeaufschlagung einer der beiden Wirkflächen des Schwenkkolbens SK5 kann dieser aus einer ersten Endlage in eine zweite Endlage verfahren werden, und umgekehrt, wobei das Zahnrad SK7 angetrieben wird, so dass der über die Welle SK8 und die Klemme SK9 angeschlossene Halter H3 aus einer horizontalen Lage, wie in den Fig. 7 bis 11 gezeigt, in eine vertikale Lage verschwenkt wird, und umgekehrt.

Der Aufbau und die Funktion der im dargestellten Ausführungsbeispiel als Halter H1, H2, H3 vorgesehenen, pneumatisch betätigbaren Mehrfingergreifer sind an sich bekannt, so dass hierzu an dieser Stelle keine weiteren Erläuterungen notwendig sind. Diese Mehrfingergreifer lassen sich so steuern, dass sie ein Brillenglas L oder Blockstück B wahlweise am Rand greifen oder freigeben.

Zur räumlichen Anordnung der Halter H1, H2, H3 am Träger TR ist noch zu sagen, dass die Anordnung so getroffen ist, dass im am Maschinengestell MG montierten Zustand des Ladesystems LS der zweite Halter H2 für die abgeblockten Brillengläser L quer zu der Transportrichtung R des Förderbands FB gesehen neben dem dritten Halter H3 für die Blockstücke B liegt, wie die Fig. 1 und 2 zeigen, so dass hier simultan gearbeitet werden kann.

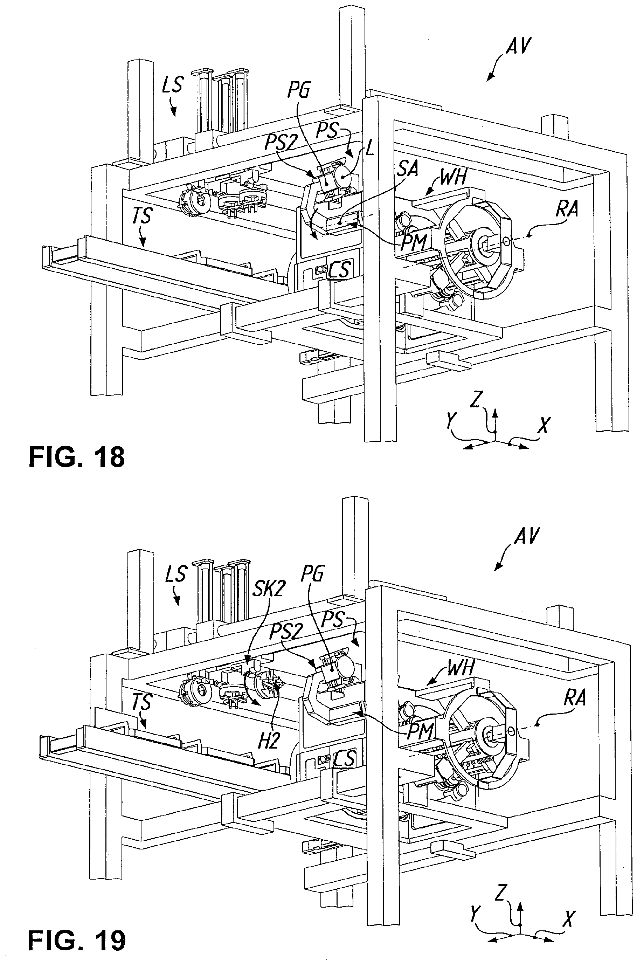

Was die Handhabung der abgeblockten Brillengläser L in der Werkstück-Halteanordnung WH der Abblockvorrichtung AV angeht, bliebe schließlich an dieser Stelle noch zu erwähnen, dass der zweiten Teilstation PS2 der Ladestation PS gemäß insbesondere den Fig. 16 bis 21 ein Schwenkmechanismus PM zugeordnet ist, der einen Werkstückgreifer PG trägt, hier in der Form eines Parallelgreifers. Durch geeignete Ansteuerung des Schwenkmechanismus PM kann der daran angebrachte Werkstückgreifer PG um eine in Fig. 18 eingezeichnete Schwenkachse SA in die zweite Teilstation PS2 der Ladestation PS eingeschwenkt (wie in den Fig. 16 und 17 gezeigt) bzw. aus der zweiten Teilstation PS2 ausgeschwenkt werden, entsprechend dem in Fig. 18 eingezeichneten Pfeil. Mittels des Werkstückgreifers PG kann ein abgeblocktes Brillenglas L wahlweise am Rand gegriffen oder freigegeben werden. Im Übrigen ist bezüglich der Handhabung der Brillengläser L und Blockstücke B in der Werkstück-Halteanordnung WH der Abblockvorrichtung AV an dieser Stelle nochmals ausdrücklich auf die vorgenannte deutsche Parallelanmeldung zu verweisen.

Nachfolgend soll unter Bezugnahme auf die eher schematischen Fig. 14 bis 35 noch ein mit dem vorbeschriebenen Ladesystem LS möglicher, vollautomatischer Lade- bzw. Entladezyklus an der Abblockvorrichtung AV in seinem zeitlichen Ablauf beschrieben werden, wobei in diesen Figuren der besseren Übersichtlichkeit halber lediglich die zur jeweiligen Figur beschriebenen Bezugszeichen eingezeichnet wurden. Im vorliegenden Fall ist das Ladesystem LS im Wesentlichen horizontal ausgerichtet. Wenn nachfolgend von "horizontal" und "vertikal" die Rede ist, meint dies zwei senkrecht zueinander verlaufende Richtungen (x-Richtung, y-Richtung). Auch wenn mit diesen Begriffen bei dem hier gezeigten Ausführungsbeispiel Richtungen beschrieben werden, die in der Realität im Wesentlichem horizontal bzw. im Wesentlichen vertikal verlaufen, so ist dies nicht in dem Sinne beschränkend zu verstehen, dass die entsprechenden Richtungen nicht auch beliebig im Raum liegen könnten, solange gewährleistet bleibt, dass "horizontal" und "vertikal" senkrecht zueinander verlaufen.

Fig. 14: Der x-Schlitten XS des Ladesystems LS verfährt in eine Position, in der sich der vertikal ausgerichtete erste Halter H1 (in dieser Figur verdeckt durch das Maschinengestell MG) mittig über einem geblockten Brillenglas L befindet, das in x-Richtung vorne in einem Rezeptkasten RK zum Abblocken bereitgestellt wird, der auf dem Förderband FB in x-Richtung an hinterster Stelle der Übergabestation TS der Abblockvorrichtung AV positioniert ist.

Fig. 15: Der erste Halter H1 wird in negativer z-Richtung in eine untere Endlage verfahren, in der sich die vier Finger des ersten Halters H1 in einer zum Greifen des geblockten Brillenglases L geeigneten Höhe befinden.

Fig. 16: Nachdem der erste Halter H1 das geblockte Brillenglas L gegriffen hat, wird er wieder in positiver z-Richtung in eine obere Endlage verfahren.

Fig. 17: Der erste Halter H1 wird mittels des ersten Schwenkmechanismus SK1 aus der vertikalen Lage in eine horizontale Lage verschwenkt, so dass die Mittelachse des geblockten Brillenglases L horizontal ausgerichtet ist.

Fig. 18: An der zweiten Teilstation PS2 der Ladestation PS wird ein von dem Werkstückgreifer PG gehaltenes, abgeblocktes Brillenglas L mittels des Schwenkmechanismus PM für den Werkstückgreifer PG um die Schwenkachse SA aus der Teilstation PS2 der Ladestation PS herausgeschwenkt.

Fig. 19: Der zweite Halter H2 wird mittels des zweiten Schwenkmechanismus SK2 ebenfalls aus einer vertikalen in eine horizontale Lage verschwenkt.

Fig. 20: Der x-Schlitten XS und der Träger TR werden zunächst gleichzeitig in positiver x-Richtung und negativer y-Richtung verfahren, bis der zweite Halter H2 mit einem definierten Abstand zu dem im Werkstückgreifer PG gehaltenen abgeblockten Brillenglas L positioniert ist; im Anschluss erfolgt eine Bewegung des Trägers TR in negativer y-Richtung bis die vier Finger des zweiten Halters H2 um den Rand des im Werkstückgreifer PG gehaltenen abgeblockten Brillenglases L angeordnet sind.

Fig. 21: Der zweite Halter H2 greift das abgeblockte Brillenglas L, der Werkstückgreifer PG wird geöffnet und der Träger TR wird in positiver y-Richtung verfahren, um das abgeblockte Brillenglas L aus dem Schwenkbereich des Werkstückgreifers PG zu bewegen. Zeitgleich wird das Blockstück B, das noch in dem Werkstückhalter CH des vierten Arbeitsraums AR4 der Werkstück-Halteanordnung WH gehalten ist, der sich in der zweiten Teilstation PS2 der Ladestation PS befindet, mittels einer Verdrehung der Werkstück-Halteanordnung WH um 90° um die Drehachse RA in die erste Teilstation PS1 der Ladestation PS transportiert.

Fig. 22: Der x-Schlitten XS wird in positiver x-Richtung verfahren, bis sich der dritte Halter H3 über der Längsachse LA1 des Werkstückhalters CH befindet, der mit dem vierten Arbeitsraum AR4 der Werkstück-Halteanordnung WH in der ersten Teilstation PS1 der Ladestation PS angeordnet ist.

Fig. 23: Der dritte Halter H3 wird mittels des dritten Schwenkmechanismus SK3 aus der vertikalen Lage in die horizontale Lage verschwenkt.

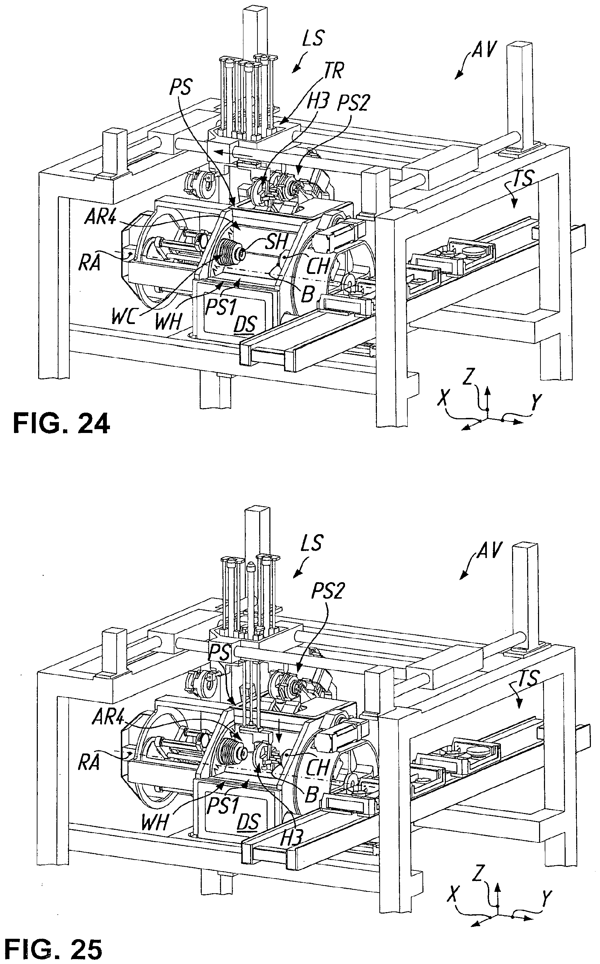

Fig. 24: Der Träger TR wird in negativer y-Richtung verfahren, bis der dritte Halter H3 in y-Richtung zwischen dem Werkstückhalter CH des vierten Arbeitsraums AR4 und dem gegenüberliegenden Saugkopf SH des entsprechenden Werkstückgegenhalters WC positioniert ist.

Fig. 25: Der dritte Halter H3 wird in negativer z-Richtung in die untere Endlage verfahren, so dass der dritte Halter H3 dem in dem Werkstückhalter CH des vierten Arbeitsraums AR4 gehaltenen Blockstück B gegenübersteht.

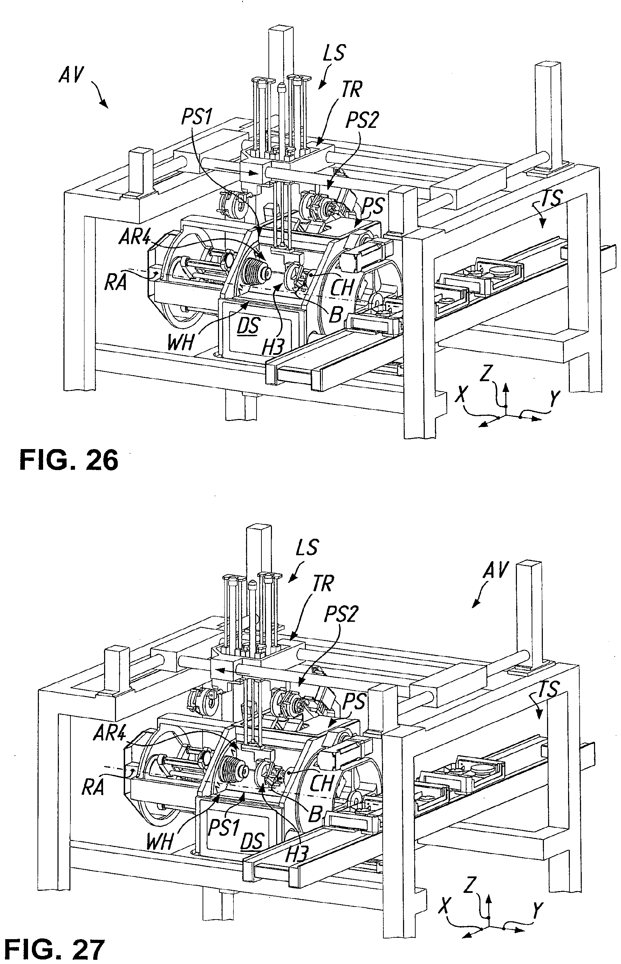

Fig. 26: Der Träger TR wird in positiver y-Richtung verfahren, damit der dritte Halter H3 das Blockstück B im Werkstückhalter CH des vierten Arbeitsraums AR4 greifen kann.

Fig. 27: Der Träger TR wird in negativer y-Richtung verfahren, so dass der dritte Halter H3 das Blockstück B aus dem Werkstückhalter CH des vierten Arbeitsraums AR4 zieht.

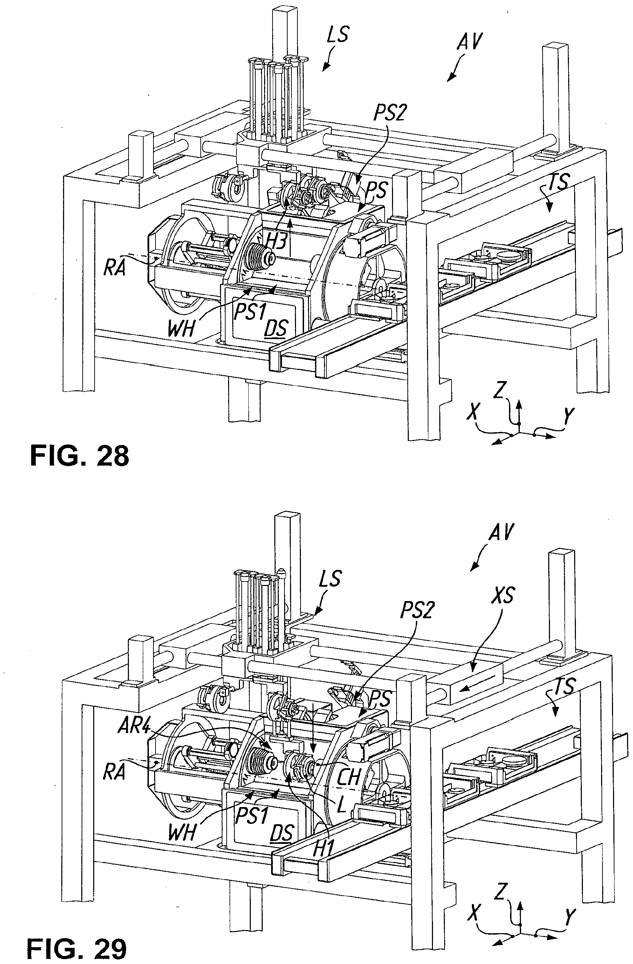

Fig. 28: Der dritte Halter H3 wird in positiver z-Richtung in seine obere Endlage verfahren.

Fig. 29: Das mit dem ersten Halter H1 gehaltene, geblockte Brillenglas L wird gegenüber dem Werkstückhalter CH des vierten Arbeitsraums AR4 in der ersten Teilstation PS1 der Ladestation PS positioniert, indem der x-Schlitten XS in positiver x-Richtung und der erste Halter H1 in negativer z-Richtung in seine untere Endlage verfahren werden.

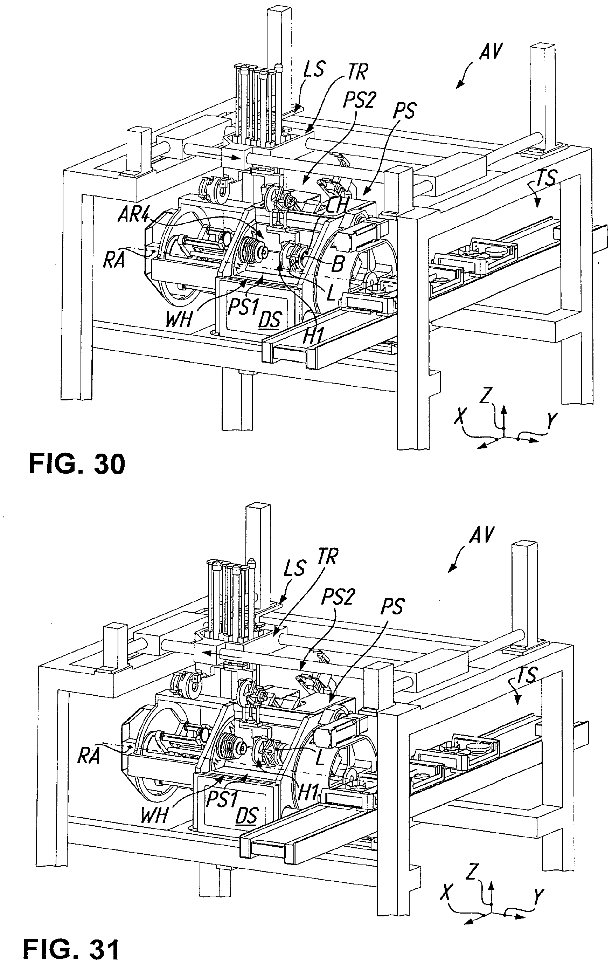

Fig. 30: Der Träger TR wird in positiver y-Richtung verfahren und das am ersten Halter H1 gehaltene, geblockte Brillenglas L wird mit seinem Blockstück B in den Werkstückhalter CH des vierten Arbeitsraums AR4 eingesetzt.

Fig. 31: Der erste Halter H1 wird zur Freigabe des geblockten Brillenglases L geöffnet und der Träger TR wird in negativer y-Richtung verfahren.

Fig. 32: Der erste Halter H1 wird in positiver z-Richtung in die obere Endlage verfahren.

Fig. 33: Die drei Halter H1, H2, H3 werden mittels des jeweiligen Schwenkmechanismus SK1, SK2, SK3 in die vertikale Lage verschwenkt, wobei der x-Schlitten XS und der Träger TR so in positiver y-Richtung und negativer x-Richtung verfahren werden, dass das abgeblockte Brillenglas L am zweiten Halter H2 und das Blockstück B am dritten Halter H3 zum Ablegen über dem Rezeptkasten RK positioniert sind, der sich in x-Richtung an vorderster Stelle der Übergabestation TS auf dem Förderband FB befindet.

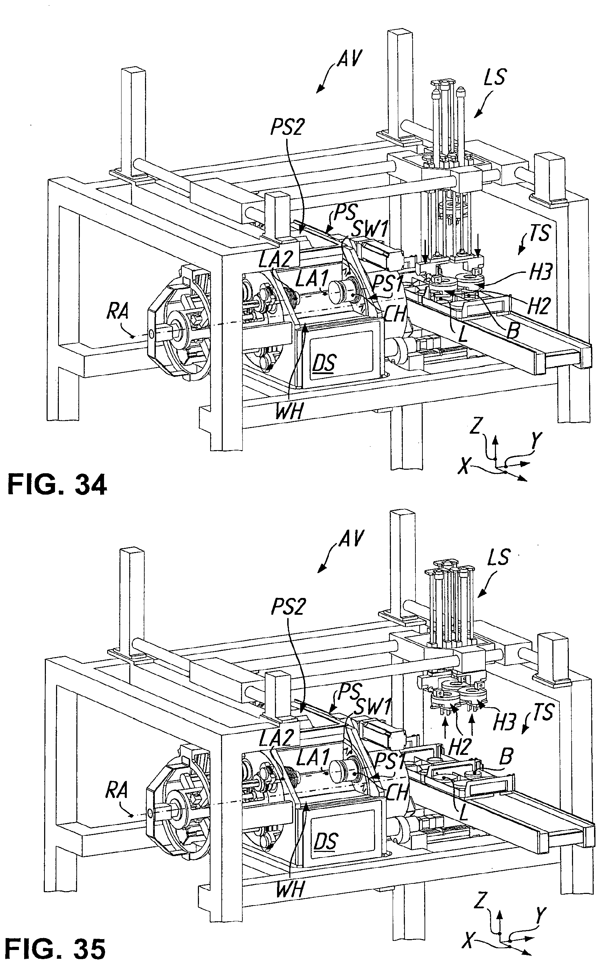

Fig. 34: Der zweite Halter H2 und der dritte Halter H3 werden zum Ablegen des Blockstücks B und des abgeblockten Brillenglases L in negativer z-Richtung in die untere Endlage verfahren.

Fig. 35: Nach dem Ablegen des Blockstücks B und des abgeblockten Brillenglases L werden der zweite Halter H2 und der dritte Halter H3 in positiver z-Richtung in die obere Endlage verfahren, worauf ein neuer Be- und Entladezyklus beginnen kann.

Aufgrund der hohen Dynamik des vorbeschriebenen Ladesystems LS ist es möglich, auch einen vergleichsweise hohen Durchsatz von in der Abblockvorrichtung AV abgeblockten Brillengläsern L von z.B. 250 Brillengläsern L pro Stunde ladetechnisch (Be- und Entladen) zu meistern, und dies bei dennoch sehr einfacher Einrichtung, großer Übersichtlichkeit, guter Servicefreundlichkeit und hoher Produktionsverfügbarkeit.

Ein Ladesystem für eine Optikmaschine, insbesondere zum Laden und Entladen optischer Werkstücke, wie Brillengläser, und/oder von Blockstücken zum Aufblocken der Werkstücke und/oder von Werkzeugen, hat einen Träger, der über zwei Linearführungseinheiten in einer Bewegungsebene bewegbar ist. Am Träger ist wenigstens ein Halter für das Werkstück, Blockstück und/oder Werkzeug montiert, der in einer Querrichtung zur Bewegungsebene bewegbar ist. Die Linearführungseinheiten sind in der Art eines H- oder Kreuzportals ausgebildet und angeordnet, mit zwei ortsfesten Antriebsmotoren für den gleich- oder gegensinnigen Antrieb eines Zugglieds, das in einer H- oder Kreuzform an den Linearführungseinheiten bewegbar angeordnet und am Träger befestigt ist. Das Ladesystem findet vorzugsweise in einer Abblockvorrichtung Verwendung, um aufgeblockte wie abgeblockte Werkstücke und Blockstücke mit sehr hoher Dynamik zwischen einer Übergabestation und einer Ladestation der Abblockvorrichtung zu transportieren, dort jeweils aufzunehmen bzw. abzugeben.

### BEZUGSZEICHENLISTE

- AM1: erster Antriebsmotor des Ladesystems
- AM2: zweiter Antriebsmotor des Ladesystems
- AV: Abblockvorrichtung
- AR1: erster Arbeitsraum der Werkstück-Halteanordnung
- AR2: zweiter Arbeitsraum der Werkstück-Halteanordnung
- AR3: dritter Arbeitsraum der Werkstück-Halteanordnung
- AR4: vierter Arbeitsraum der Werkstück-Halteanordnung
- AS: Abstreifer für Linearlagerelement
- B: Blockstück
- BF: Bedienfeld der Abblockvorrichtung
- BS: Befestigungsstelle für Zugglied des Ladesystems
- CH: Werkstückhalter der Werkstück-Halteanordnung
- CS: Reinigungsstation der Abblockvorrichtung
- DS: Abblockstation der Abblockvorrichtung
- FB: Förderband der Abblockvorrichtung
- FG: Linearführung für Halter
- FG1: Führungsbock der Linearführung
- FG2: Führungsstange der Linearführung
- FG3: Traverse der Linearführung
- FG4: Flanschplatte der Linearführung
- FG5: Anschlagdämpfer für Linearführung
- H1: erster Halter des Ladesystems
- H2: zweiter Halter des Ladesystems
- H3: dritter Halter des Ladesystems
- HA: Hydraulikanordnung der Abblockvorrichtung
- HS1: erster x-Halbschlitten des Ladesystems
- HS2: zweiter x-Halbschlitten des Ladesystems
- L: optisches Werkstück / Brillenglas
- LA1: Längsachse des Werkstückhalters
- LA2: Längsachse des Werkstückgegenhalters
- LF1: erste Linearführungseinheit des Ladesystems
- LF2: zweite Linearführungseinheit des Ladesystems
- LL: Linearlagerelement des Ladesystems
- LS: Ladesystem
- MG: Maschinengestell der Abblockvorrichtung
- OE: Öffnung im Träger des Ladesystems
- PE: Pumpeneinrichtung der Hydraulikanordnung
- PG: Werkstückgreifer der Werkstück-Halteanordnung
- PM: Schwenkmechanismus der Werkstück-Halteanordnung
- PS: Ladestation der Abblockvorrichtung
- PS1: erste Teilstation der Ladestation
- PS2: zweite Teilstation der Ladestation
- PZ1: erster Pneumatikzylinder des Ladesystems
- PZ2: zweiter Pneumatikzylinder des Ladesystems
- PZ3: dritter Pneumatikzylinder des Ladesystems
- RA: Drehachse der Werkstück-Halteanordnung
- RK: Rezeptkasten
- SA: Schwenkachse des Schwenkmechanismus der Ladestation
- SE: Spanneinrichtung für Zugglied des Ladesystems
- SK1: erster Schwenkmechanismus des Ladesystems
- SK2: zweiter Schwenkmechanismus des Ladesystems
- SK3: dritter Schwenkmechanismus des Ladesystems
- SK4: Gehäuse des Schwenkmechanismus
- SK5: Schwenkkolben des Schwenkmechanismus
- SK6: Verzahnung des Schwenkmechanismus
- SK7: Zahnrad des Schwenkmechanismus
- SK8: Welle des Schwenkmechanismus
- SK9: Klemme des Schwenkmechanismus
- SS: Schaltschrank der Abblockvorrichtung
- SU: Absaugung der Abblockvorrichtung
- SW1: erste Stirnwand der Werkstück-Halteanordnung
- SW2: zweite Stirnwand der Werkstück-Halteanordnung
- T: Tank für Hydraulikanordnung
- TG: trichterförmiger Gehäuseabschnitt
- TR: Träger / y-Schlitten des Ladesystems
- TS: Übergabestation der Abblockvorrichtung
- TW: Trennwand der Werkstück-Halteanordnung
- UL1: 180°-Umlenkung für Zugglied des Ladesystems
- UL2: 180°-Umlenkung für Zugglied des Ladesystems
- UL3: 180°-Umlenkung für Zugglied des Ladesystems
- UL4: 180°-Umlenkung für Zugglied des Ladesystems
- UL5: 90°-Umlenkung für Zugglied des Ladesystems
- UL6: 90°-Umlenkung für Zugglied des Ladesystems
- UL7: 90°-Umlenkung für Zugglied des Ladesystems
- UL8: 90°-Umlenkung für Zugglied des Ladesystems
- VE: Verteilereinrichtung der Hydraulikanordnung
- VI: Ventilinsel am Träger des Ladesystems
- WC: Werkstückgegenhalter der Werkstück-Halteanordnung
- WH: Werkstück-Halteanordnung der Abblockvorrichtung
- XF1: erstes x-Führungsglied des Ladesystems
- XF2: zweites x-Führungsglied des Ladesystems
- XS: x-Schlitten des Ladesystems
- YF1: erstes y-Führungsglied des Ladesystems
- YF2: zweites y-Führungsglied des Ladesystems
- ZG: Zugglied des Ladesystems

- x: Längenrichtung
- y: Breitenrichtung
- z: Höhenrichtung

## Patentansprüche

1. Ladesystem (LS) für eine Optikmaschine, insbesondere zum Laden und Entladen optischer Werkstücke (L), wie Brillengläser, und/oder von Blockstücken (B) zum Aufblocken von optischen Werkstücken (L) und/oder von Werkzeugen, mit einem in einer Bewegungsebene (x-y) über zwei Linearführungseinheiten (LF1, LF2) bewegbaren Träger (TR), der wenigstens einen in einer Querrichtung (z) zur Bewegungsebene (x-y) bewegbaren Halter (H1, H2, H3) für das optische Werkstück (L) und/oder das Blockstück (B) und/oder das Werkzeug trägt, **dadurch gekennzeichnet, dass** die Linearführungseinheiten (LF1, LF2) in der Art eines H- oder Kreuzportals ausgebildet und angeordnet sind, mit zwei ortsfesten Antriebsmotoren (AM1, AM2) für den gleich- oder gegensinnigen Antrieb eines Zugglieds (ZG), das in einer H- oder Kreuzform an den Linearführungseinheiten (LF1, LF2) bewegbar angeordnet und am Träger (TR) befestigt ist.

2. Ladesystem (LS) nach Anspruch 1, **dadurch gekennzeichnet,**
**dass** die eine Linearführungseinheit (LF1) zwei parallel zueinander verlaufende, ortsfeste x-Führungsglieder (XF1, XF2) aufweist, an denen jeweils ein x-Halbschlitten (HS1, HS2) längsverschieblich geführt ist, während die andere Linearführungseinheit (LF2) zwei parallel zueinander und quer zu den x-Führungsgliedern (XF1, XF2) verlaufende y-Führungsglieder (YF1, YF2) hat, welche die x-Halbschlitten (HS1, HS2) starr miteinander verbinden und an denen der Träger (TR) als y-Schlitten längsverschieblich geführt ist, und/oder
**dass** es sich bei dem Zugglied (ZG) um einen Riemen, insbesondere einen Zahnriemen handelt.

3. Ladesystem (LS) nach Anspruch 2, **dadurch gekennzeichnet, dass** bei in der Art eines H-Portals ausgebildeten und angeordneten Linearführungseinheiten (LF1, LF2) jedem der ortsfesten x-Führungsglieder (XF1, XF2) zwei endseitig angeordnete 180°-Umlenkungen (UL1, UL2, UL3, UL4) für das Zugglied (ZG) zugeordnet sind, während jeder der x-Halbschlitten (HS1, HS2) zwei 90°-Umlenkungen (UL5, UL6, UL7, UL8) für das Zugglied (ZG) trägt, wobei eine (UL1) der 180°-Umlenkungen (UL1, UL3) an dem einen x-Führungsglied (XF1) durch einen (AM1) der ortsfesten Antriebsmotoren (AM1, AM2) antreibbar ist und unabhängig davon die andere (UL2) der 180°-Umlenkungen (UL2, UL4) an dem anderen x-Führungsglied (XF2) durch den anderen (AM2) der ortsfesten Antriebsmotoren (AM1, AM2) antreibbar ist.

4. Ladesystem (LS) nach Anspruch 3, **dadurch gekennzeichnet, dass** eine (UL4) der 180°-Umlenkungen (UL1, UL2, UL3, UL4) mit einer Spanneinrichtung (SE) für das Zugglied (ZG) versehen ist.

5. Ladesystem (LS) nach einem der Ansprüche 2 bis 4, **dadurch gekennzeichnet,**
**dass** es sich bei den x-Führungsgliedern (XF1, XF2) und/ oder bei den y-Führungsgliedern (YF1, YF2) um Führungsstangen handelt und/oder
**dass** es sich bei den x-Führungsgliedern (XF1, XF2) und/ oder bei den y-Führungsgliedern (YF1, YF2) um Führungsstangen mit einem runden Querschnitt handelt und/oder
**dass** die y-Führungsglieder (YF1, YF2) als Hohlkörper ausgebildet sind.

6. Ladesystem (LS) nach Anspruch 5, **dadurch gekennzeichnet,**
**dass** jeder der x-Halbschlitten (HS1, HS2) mit zwei axial voneinander beabstandeten Linearlagerelementen (LL) versehen ist, die mit der jeweils als x-Führungsglied (XF1, XF2) zugeordneten Führungsstange zusammenwirken, und/oder
**dass** der als y-Schlitten ausgebildete Träger (TR) drei voneinander beabstandete Linearlagerelemente (LL) aufweist, von denen zwei Linearlagerelemente (LL) mit dem einen als Führungsstange ausgebildeten y-Führungsglied (YF2) zusammenwirken, während das andere Linearlagerelement (LL) mit dem anderen als Führungsstange ausgebildeten y-Führungsglied (YF1) zusammenwirkt.

7. Ladesystem (LS) nach Anspruch 6, **dadurch gekennzeichnet, dass** das Zugglied (ZG) nahe den zwei Linearlagerelementen (LL), die beide mit dem einen als Führungsstange ausgebildeten y-Führungsglied (YF2) zusammenwirken, an dem Träger (TR) an einer Befestigungsstelle (BS) befestigt ist.

8. Ladesystem (LS) nach Anspruch 6 oder 7, **dadurch gekennzeichnet, dass** es sich bei den Linearlagerelementen (LL) um Kugelbuchsen handelt.

9. Ladesystem (LS) nach Anspruch 8, **dadurch gekennzeichnet, dass** den als Kugelbuchsen ausgebildeten Linearlagerelementen (LL) jeweils zu beiden Längsseiten Abstreifer (AS) zugeordnet sind.

10. Ladesystem (LS) nach einem der vorhergehenden Ansprüche, **dadurch gekennzeichnet,**
**dass** der wenigstens eine oder jeder Halter (H1, H2, H3) mittels eines zugeordneten Pneumatikzylinders (PZ1, PZ2, PZ3) in der Querrichtung (z) zur Bewegungsebene (x-y) bewegbar ist und/oder
**dass** der wenigstens eine oder jeder Halter (H1, H2, H3) ferner mittels eines zugeordneten pneumatischen Schwenkmechanismus (SK1, SK2, SK3) von einer mit der Querrichtung (z) ausgefluchteten Lage zu einer im Wesentlichen senkrecht zur Querrichtung (z) ausgerichteten Lage verschwenkbar ist, und umgekehrt, und/oder
**dass** es sich bei dem wenigstens einen oder jedem Halter (H1, H2, H3) um einen pneumatisch betätigbaren Mehrfingergreifer handelt und/oder
**dass** der Träger (TR) in einer Draufsicht gesehen im Wesentlichen O-förmig ausgebildet ist, mit einer zentralen Öffnung (OE), in der der wenigstens eine Halter (H1, H2, H3) in der Querrichtung (z) zur Bewegungsebene (x-y) bewegbar montiert ist.

11. Ladesystem (LS) nach wenigstens den Ansprüchen 2 und 10, **dadurch gekennzeichnet, dass** eine Ventilinsel (VI) zur Ansteuerung des Pneumatikzylinders (PZ1, PZ2, PZ3) oder der Pneumatikzylinder (PZ1, PZ2, PZ3) und/oder des pneumatischen Schwenkmechanismus (SK1, SK2, SK3) oder der pneumatischen Schwenkmechanismen (SK1, SK2, SK3) und/oder des pneumatisch betätigbaren Mehrfingergreifers (H1, H2, H3) oder der pneumatisch betätigbaren Mehrfingergreifer (H1, H2, H3) auf dem als y-Schlitten ausgebildeten Träger (TR) angeordnet ist.

12. Vorrichtung (AV) zum Abblocken von optischen Werkstücken (L), insbesondere Brillengläsern, von zugeordneten Blockstücken (B), mit einer Übergabestation (TS) für die Ablage von auf Blockstücken (B) aufgeblockten optischen Werkstücken (L) und/ oder abgeblockten optischen Werkstücken (L) und/oder Blockstücken (B), und einer Ladestation (PS) zum Beladen von auf Blockstücken (B) aufgeblockten optischen Werkstücken (L) vor dem Abblocken und/oder Entladen von abgeblockten optischen Werkstücken (L) und/oder von Blockstücken (B) nach dem Abblocken, **gekennzeichnet durch** ein Ladesystem (LS) nach einem der vorhergehenden Ansprüche, mittels dessen die auf Blockstücken (B) aufgeblockten optischen Werkstücke (L) und/oder die abgeblockten optischen Werkstücke (L) und/oder die Blockstücke (B) zwischen der Übergabestation (TS) und der Ladestation (PS) transportierbar und in die bzw. aus der jeweilige(n) Station (TS, PS) einlegbar bzw. entnehmbar sind.

13. Vorrichtung (AV) nach Anspruch 12, **dadurch gekennzeichnet, dass** der Träger (TR) des Ladesystems (LS) drei in der Querrichtung (z) zur Bewegungsebene (x-y) bewegbare Halter (H1, H2, H3) trägt, von denen ein erster Halter (H1) den auf Blockstücken (B) aufgeblockten optischen Werkstücken (L), ein zweiter Halter (H2) den abgeblockten optischen Werkstücken (L) und ein dritter Halter (H3) den Blockstücken (B) zugeordnet ist.

14. Vorrichtung (AV) nach Anspruch 12 oder 13, **dadurch gekennzeichnet, dass** die Übergabestation (TS) ein Förderband (FB) zum Transport von Rezeptkästen (RK), die der Aufnahme von auf Blockstücken (B) aufgeblockten optischen Werkstücken (L) und/ oder abgeblockten optischen Werkstücken (L) und/oder Blockstücken (B) dienen, in einer Transportrichtung (R) aufweist.

15. Vorrichtung (AV) nach den Ansprüchen 13 und 14, **dadurch gekennzeichnet, dass** der zweite Halter (H2) für die abgeblockten optischen Werkstücke (L) quer zu der Transportrichtung (R) des Förderbands (FB) gesehen neben dem dritten Halter (H3) für die Blockstücke (B) liegt.

## Claims

1. Loading system (LS) for an optical machine, particularly for loading and unloading optical workpieces (L), such as spectacle lenses, and/or block pieces (B) for blocking optical workpieces (L) and/or tools, comprising a carrier (TR), which is movable in a movement plane (x-y) by way of two linear guide units (LF1, LF2) and which carries at least one holder (H1, H2, H3) for the optical workpiece (L) and/or the block piece (B) and/or the tool, the holder being movable in a transverse direction (z) with respect to the movement plane (x-y), **characterized in that** the linear guide units (LF1, LF2) are constructed and arranged in the form of an H gantry or a cross gantry, with two stationary drive motors (AM1, AM2) for drive in the same or opposite sense of a traction element (ZG) which is movably arranged in an H shape or a cross shape at the linear guide units (LF1, LF2) and secured to the carrier (TR).

2. Loading system (LS) according to claim 1, **characterized in**
**that** one linear guide unit (LF1) comprises two stationary x-guide elements (XF1, XF2), which extend parallel to one another and at each of which a respective x-half-carriage (HS1, HS2) is guided to be longitudinally displaceable, whilst the other linear guide unit (LF2) comprises two y-guide elements (YF1, YF2), which extend parallel to one another and transversely to the x-guide elements (XF1, XF2) and rigidly connect the x-half-carriages (HS1, HS2) together and at which the carrier (TR) as y-carriage is guided to be longitudinally displaceable, and/or
**that** the traction element (ZG) is a belt, preferably a cogged belt.

3. Loading system (LS) according to claim 2, **characterized in that**, when the linear guide units (LF1, LF2) are constructed and arranged in the form of an H gantry, two 180° deflections (UL1, UL2, UL3, UL4) for the traction element (ZG) are associated with each of the stationary x-guide elements (XF1, XF2) and arranged at the ends, whilst each of the x-half-carriages (HS1, HS2) carries two 90° deflections (UL5, UL6, UL7, UL8) for the traction element (ZG), wherein one (UL1) of the 180° deflections (UL1, UL3) at one x-guide element (XF1) is drivable by one (AM1) of the stationary drive motors (AM1, AM2) and independently thereof the other one (UL2) of the 180° deflections (UL2, UL4) at the other x-guide element (XF2) is drivable by the other one (AM2) of the stationary drive motors (AM1, AM2).

4. Loading system (LS) according to claim 3, **characterized in that** one (UL4) of the 180° deflections (UL1, UL2, UL3, UL4) is provided with a tensioning device (SE) for the traction element (ZG) .

5. Loading system (LS) according to any one of claims 2 to 4, **characterized in**
**that** the x-guide elements (XF1, XF2) and/or the y-guide elements (YF1, YF2) are guide rods and/or
**that** the x-guide elements (XF1, XF2) and/or the y-guide elements (YF1, YF2) are guide rods with a round cross-section and/or
**that** the y-guide elements (YF1, YF2) are constructed as hollow bodies.

6. Loading system (LS) according to claim 5, **characterized in**
**that** each of the x-half-carriages (HS1, HS2) is provided with two linear bearing elements (LL), which are axially spaced from one another and which co-operate with the guide rod respectively associated as x-guide element (XF1, XF2), and/or
**that** the carrier (TR) constructed as y-carriage comprises three linear bearing elements (LL), which are spaced from one another and of which two linear bearing elements (LL) co-operate with one y-guide element (YF2) constructed as a guide rod, whilst the other linear bearing element (LL) co-operates with the other y-guide element (YF1) constructed as a guide rod.

7. Loading system (LS) according to claim 6, **characterized in that** the traction element (ZG) is secured to the carrier (TR) at a securing point (BS) near the two linear bearing elements (LL), which both co-operate with the one y-guide element (YF2) constructed as a guide rod.

8. Loading system (LS) according to claim 6 or 7, **characterized in that** the linear bearing elements (LL) are ball bushings.

9. Loading system (LS) according to claim 8, **characterized in that** strippers (AS) are assigned to both longitudinal sides of the linear bearing elements (LL) constructed as ball bushings.

10. Loading system (LS) according to any one of the preceding claims, **characterized in**
**that** the at least one or each holder (H1, H2, H3) is movable by an associated pneumatic cylinder (PZ1, PZ2, PZ3) in the transverse direction (z) with respect to the movement plane (x-y) and/or
**that** the at least one or each holder (H1, H2, H3) is in addition pivotable by an associated pneumatic pivot mechanism (SK1, SK2, SK3) from a position aligned with the transverse direction (z) to a position oriented substantially perpendicularly to the transverse direction (z), and conversely, and/or
**that** the at least one or each holder (H1, H2, H3) is a pneumatically actuable multi-finger gripper and/or
**that** the carrier (TR) as seen in plan view is of substantially O-shaped configuration with a central opening (OE) in which the at least one holder (H1, H2, H3) is mounted to be movable in the transverse direction (z) with respect to the movement plane (x-y).

11. Loading system (LS) according to at least claims 2 and 10, **characterized in that** a valve terminal (VI) for activation of the pneumatic cylinder (PZ1, PZ2, PZ3) or the pneumatic cylinders (PZ1, PZ2, PZ3) and/or the pneumatic pivot mechanism (SK1, SK2, SK3) or the pneumatic pivot mechanisms (SK1, SK2, SK3) and/or the pneumatically actuable multi-finger gripper (H1, H2, H3) or the pneumatically actuable multi-finger grippers (H1, H2, H3) is arranged on the carrier (TR) constructed as y-carriage.

12. Device (AV) for deblocking optical workpieces (L), particularly spectacle lenses, from associated block pieces (B), comprising a transfer station (TS) for deposit of optical workpieces (L) blocked on block pieces (B) and/or deblocked optical workpieces (L) and/or block pieces (B), and a loading station (PS) for loading optical workpieces (L), which are blocked on block pieces (B), prior to deblocking and/or unloading deblocked optical workpieces (L) and/or block pieces (B) after deblocking, **characterized by** a loading system (LS) according to any one of the preceding claims, by which the optical workpieces (L) blocked on block pieces and/or the deblocked optical workpieces (L) and/or the block pieces (B) are transportable between the transfer station (TS) and the loading station (PS) and can be placed in or removed from the respective station (TS, PS).

13. Device (AV) according to claim 12, **characterized in that** the carrier (TR) of the loading system (LS) comprises three holders (H1, H2, H3), which are movable in the transverse direction (z) with respect to the movement plane (x-y) and of which a first holder (H1) is assigned to the optical workpieces (L) blocked on block pieces (B), a second holder (H2) is assigned to the deblocked optical workpieces (L) and a third holder (H3) is assigned to the block pieces (B).

14. Device (AV) according to claim 12 or 13, **characterized in that** the transfer station (TS) comprises a conveyor belt (FB) for transport in a transport direction (R) of job trays (RK) serving for reception of optical workpieces (L) blocked on block pieces (B) and/or deblocked optical workpieces (L) and/or block pieces (B).

15. Device (AV) according to claims 13 and 14, **characterized in that** the second holder (H2) for the deblocked optical workpieces (L) as seen transversely to the transport direction (R) of the conveyor belt (FB) lies adjacent to the third holder (H3) for the block pieces (B).

## Revendications

1. Système de chargement (LS) pour une machine optique, en particulier pour le chargement et le déchargement de pièces optiques (L), telles que des verres de lunettes, et/ou de pièces de blocage (B) pour le blocage de pièces optiques (L) et/ou d'outils, avec un support (TR) déplaçable dans un plan de déplacement (x-y) sur deux unités de guidage linéaire (LF1, LF2), qui porte au moins un organe de maintien (H1, H2, H3) déplaçable dans une direction transversale (z) par rapport au plan de déplacement (x-y) pour la pièce optique (L) et/ou la pièce de blocage (B) et/ou l'outil, **caractérisé en ce que** les unités de guidage linéaire (LF1, LF2) sont conçues et disposées à la manière d'un portail en H ou en croix, avec deux moteurs d'entraînement (AM1, AM2) fixes pour l'entraînement dans le même sens ou en sens inverse d'un organe de traction (ZG) qui est disposé déplaçable sous forme de H ou de croix sur les unités de guidage linéaire (LF1, LF2) et est fixé au support (TR).

2. Système de chargement (LS) selon la revendication 1, **caractérisé en ce que** l'unité de guidage linéaire (LF1) présente deux organes de guidage en x (XF1, XF2) fixes s'étendant parallèlement l'un à l'autre, sur chacun desquels est guidée une demi-coulisse en x (HS1, HS2) de manière déplaçable longitudinalement, tandis que l'autre unité de guidage linéaire (LF2) a deux organes de guidage en y (YF1, YF2) s'étendant parallèlement l'un à l'autre et transversalement aux organes de guidage en x (XF1, XF2), qui relient les demi-coulisses en x (HS1, HS2) l'une à l'autre de manière rigide et sur lesquels le support (TR) est guidé de manière déplaçable longitudinalement sous forme de coulisse en y, et/ou
**en ce que** l'organe de traction (ZG) est une courroie, en particulier une courroie crantée.

3. Système de chargement (LS) selon la revendication 2, **caractérisé en ce que**, concernant les unités de guidage linéaire (LF1, LF2) conçues et disposées à la manière d'un portail en H, à chacun des organes de guidage en x (XF1, XF2) fixes sont associés deux éléments de déviation à 180° (UL1, UL2, UL3, UL4) disposés du côté de l'extrémité pour l'organe de traction (ZG), tandis que chacune des demi-coulisses en x (HS1, HS2) porte deux éléments de déviation à 90° (UL5, UL6, UL7, UL8) pour l'organe de traction (ZG), où l'un (UL1) des éléments de déviation à 180° (UL1, UL3) peut être entraîné sur l'un des organes de guidage en x (XF1) par l'un (AM1) des moteurs d'entraînement (AM1, AM2) et indépendamment de celui-ci, l'autre (UL2) des éléments de déviation à 180° (UL2, UL4) peut être entraîné sur l'autre organe de guidage en x (XF2) par l'autre (AM2) des moteurs d'entraînement fixes (AM1, AM2).

4. Système de chargement (LS) selon la revendication 3, **caractérisé en ce que** l'un (UL4) des éléments de déviation à 180° (UL1, UL2, UL3, UL4) est muni d'un dispositif de tension (SE) pour l'organe de traction (ZG).

5. Système de chargement (LS) selon l'une des revendications 2 à 4, **caractérisé en ce que**
les organes de guidage en x (XF1, XF2) et/ ou les organes de guidage en y (YF1, YF2) sont des tiges de guidage et/ou
**en ce que** les organes de guidage en x (XF1, XF2) et/ou les organes de guidage en y (YF1, YF2) sont des tiges de guidage avec une section ronde et/ou
**en ce que** les organes de guidage en y (YF1, YF2) sont réalisés sous forme de corps creux.

6. Système de chargement (LS) selon la revendication 5, **caractérisé en ce que** chacune des demi-coulisses en x (HS1, HS2) est munie de deux éléments de roulement linéaires (LL) distants l'un de l'autre, qui coopèrent avec la tige de guidage associée dans chaque cas sous forme d'organe de guidage en x (XF1, XF2), et/ou
**en ce que** le support (TR) conçu sous forme de coulisse en y présente trois éléments de roulement linéaires (LL) distants les uns des autres, parmi lesquels deux éléments de roulement linéaires (LL) coopèrent avec un organe de guidage en y (YF2) conçu sous forme de tige de guidage, tandis que l'autre élément de roulement linéaire (LL) coopère avec l'autre organe de guidage en y (YF1) conçu sous forme de tige de guidage.

7. Système de chargement (LS) selon la revendication 6, **caractérisé en ce que** l'organe de traction (ZG) est fixé à proximité des deux éléments de roulement linéaires (LL), qui coopèrent l'un et l'autre avec l'organe de guidage en y (YF2) conçu comme une tige de guidage, sur le support (TR) sur un emplacement de fixation (BS).

8. Système de chargement (LS) selon la revendication 6 ou 7, **caractérisé en ce que** les éléments de roulement linéaires (LL) sont des douilles à billes.

9. Système de chargement (LS) selon la revendication 8, **caractérisé en ce qu'**aux éléments de roulement linéaires (LL) conçus comme des douilles à billes sont associés deux racloirs (AS) dans chaque cas sur les deux côtés longitudinaux.

10. Système de chargement (LS) selon l'une des revendications précédentes, **caractérisé**
**en ce que** le au moins un ou chaque organe de maintien (H1, H2, H3) est déplaçable au moyen d'un vérin pneumatique associé (PZ1, PZ2, PZ3) dans la direction transversale (z) au plan de déplacement (x-y), et/ou
**en ce que** le au moins un ou chaque organe de maintien (H1, H2, H3) peut en outre être amené à pivoter au moyen d'un mécanisme de pivotement pneumatique associé (SK1, SK2, SK3) d'une position alignée avec la direction transversale (z) à une position orientée de manière sensiblement perpendiculaire à la direction transversale (z), et inversement, et/ou
**en ce que** le au moins un ou chaque organe de maintien (H1, H2, H3) est une pince multi-doigts pouvant être actionnée pneumatiquement et/ou
**en ce que** le support (TR) vu en vue de dessus est conçu sensiblement en forme de O, avec une ouverture centrale (OE) dans laquelle le au moins un organe de maintien (H1, H2, H3) est monté de manière déplaçable dans la direction transversale (z) au plan de déplacement (x-y).

11. Système de chargement (LS) selon au moins les revendications 2 et 10, **caractérisé en ce qu'**un terminal de distributeurs (VI) pour la commande du vérin pneumatique (PZ1, PZ2, PZ3) ou des vérins pneumatiques (PZ1, PZ2, PZ3) et/ou du mécanisme de pivotement pneumatique (SK1, SK2, SK3) ou des mécanismes de pivotement pneumatiques (SK1, SK2, SK3) et/ou de la pince multi-doigts pouvant être actionnée pneumatiquement (H1, H2, H3) ou des pinces multi-doigts pouvant être actionnées pneumatiquement (H1, H2, H3) est disposé sur le support (TR) conçu sous forme de coulisse en y.

12. Dispositif (AV) pour le blocage de pièces optiques (L), en particulier de verres de lunettes, de pièces de blocage (B) associées, avec une station de transfert (TS) pour le dépôt de pièces optiques (L) bloquées sur des pièces de blocage (B) et/ou de pièces optiques (L) débloquées et/ou de pièces de blocage (B), et une station de chargement (PS) pour le chargement de pièces optiques (L) bloquées sur des pièces de blocage (B) avant de déblocage et/ou le déchargement de pièces optiques (L) bloquées et/ou de pièces de blocage (B) après le déblocage, **caractérisé par** un système de chargement (LS) selon l'une des revendications précédentes, au moyen duquel les pièces optiques (L) bloquées sur des pièces de blocage (B) et/ou les pièces optiques (L) débloquées et/ou les pièces de blocage (B) peuvent être transportées entre la station de transfert (TS) et la station de chargement (PS) et peuvent être insérées ou prélevées dans la ou les ou de la ou des stations (TS, PS) correspondantes.

13. Dispositif (AV) selon la revendication 12, **caractérisé en ce que** le support (TR) du système de chargement (LS) porte trois organes de maintien (H1, H2, H3) déplaçables dans la direction transversale (z) par rapport au plan de déplacement (x-y), parmi lesquels un premier organe de maintien (H1) est associé aux pièces optiques (L) bloquées sur des pièces de blocage (B), un deuxième organe de maintien (H2) est associé aux pièces optiques (L) débloquées et un troisième organe de maintien (H3) est associé aux pièces de blocage (B).

14. Dispositif (AV) selon la revendication 12 ou 13, **caractérisé en ce que** la station de transfert (TS) présente une bande transporteuse (FB) pour le transport de boîtes à recettes (RK), qui servent à la réception de pièces optiques (L) bloquées sur des pièces de blocage (B) et/ou de pièces optiques (L) débloquées et/ ou de pièces de blocage (B), dans une direction de transport (R).

15. Dispositif (AV) selon les revendications 13 et 14, **caractérisé en ce que** le deuxième organe de maintien (H2) pour les pièces optiques (L) débloquées vu transversalement à la direction de transport (R) de la bande transporteuse (FB) est situé à côté du troisième organe de maintien (H3) pour les pièces de blocage (B).
